# EUROPEAN PATENT APPLICATION

(11) **EP 4 654 050 A1**
(43) Date of publication of application: **26.11.2025**
(21) Application number: 24199843.4
(22) Date of filing: 11.09.2024
(51) Int. Cl.: G06F 21/10, H04L 9/40

(54) **LICENSE SERVER, CLIENT DEVICE AND PROVISIONING SERVER FOR DYNAMIC DRM AND RELATED METHODS**

(30) Priority: 22.05.2024 EP 24177390
(71) Applicant: Nagravision Sarl, 1033 Cheseaux-sur-Lausanne (CH)
(72) Inventor: Bieber, Yann, 1033 Cheseaux-sur-Lausanne (CH); Bussy, Jean-Luc, 1033 Cheseaux-sur-Lausanne (CH); Thevos, Thierry, 1033 Cheseaux-sur-Lausanne (CH); Hunacek, Didier, 1033 Cheseaux-sur-Lausanne (CH); Fischer, Nicolas, 1033 Cheseaux-sur-Lausanne (CH)
(74) Representative: Santarelli

(57) **Abstract**

A license server, conditionally authorizing access by a DRM client device to protected contents upon receiving a license request from the device, receives a device-associated encryption key (K'_{DRM}) exploited for protecting access information (Kc) to the protected contents, and if authorization conditions are met, generates protected access information from the access information with the encryption key and with a security function (UP-S) available to the license server independently from the received license request and generates a license (LIC3-1S) containing the protected access information and sent to the device. The license request includes server-directed security elements (S-DATA, PF-S) that are exploited for protecting the access information so as to generate pre-protected access information (P-Kc), to which the security function is applied with the device-associated key to generate the protected access information.

## Description

### TECHNICAL FIELD

The invention relates to Digital Rights Management or DRM, and more specifically to the efficient provisioning or updating of entities in a DRM system and to related applications.

### BACKGROUND ART

DRM is an enabling technology extending to various kinds of content access, notably relevant to content delivery to users and to retrieval of resources by users. It supports multiple business models in which some users are entitled to dedicated rights while others are not, according to potentially flexible ranges of rights defined through DRM licenses.

In parallel, hacking has also developed and raises substantial difficulties in particular in the video content industry, inducing major losses of revenues insofar as people can consume contents without paying.

Several reasons may explain those hacks in spite of currently implemented technical DRM solutions. One of them is that DRM clients are usually standardized and open source, while porting is required for each device model in a sufficiently robust and performant way. That porting is typically done partly by a System-on-Chip (SoC) provider, and partly by a device manufacturer such as an Original Equipment Manufacturer (OEM). This means that any failure on either side may entail protection breaches or weaknesses.

Another reason behind the DRM security issues is that DRM client implementations are usually not certified by security companies and even when they are, no regular revalidation is implemented. This leaves opportunities to crackers (i.e. security hackers), who can rely on constantly evolving hacking tools and technics at decreasing costs. In fact, even though the secure part of a DRM client implementation is generally arranged in a trusted part of a chip (such as notably a Trusted Execution Environment - or TEE), no certified hardware secure element is usually available.

It can further be kept in mind in this respect that crackers often understand perfectly the standard functionalities, algorithms and messages offered by DRM clients, and know exactly how and where to attack so as to tentatively exploit weak implementations. Also, once a specific device model is accordingly exploited, crackers tend to keep it secret in order to prevent DRM providers from revoking weak implementations.

Multiple technical solutions were proposed for enhancing DRM security in a flexible way.

Thus, US 2017/0206340 A1 to Piksel discloses a computer guard system controlling the delivery of encrypted media assets to users and involving multiple DRM technologies associated with sets of default license properties in environments relevant to asset properties. Associations between asset properties and environments are stored by the guard system, in order to be able to identify for each environment the appropriate default license properties to be applied to the requested asset in dependence on the used DRM technology at the concerned end user platform.

The thereby introduced flexibility is obtained at the expense of potentially demanding storage and management resources required in the guard system, and relies on a centralized processing that can restrain implementation prospects.

On the DRM client side, patent application US 2023/0318605 A1 to Avago Technologies discloses notably a semiconductor product convertible from a customizable configuration into a selected one of a plurality of different customized configurations. This is carried out by relying on functional blocks, each configured for providing an assigned functionality, through activating only a subgroup of them based on a received customizing data structure. The customization may notably apply to a security configuration involving encryption keys and authentication keys, for adapting an SoC-type semiconductor product at an OEM-type product recipient entity.

In spite of the thereby offered flexibility, the latter remains bound by the original multi-options configuration, insofar as it does not enable the product to be adapted beyond the pre-selectable customized configurations. In addition, that solution is rather suited to dynamically adapting client devices to target DRM technologies implemented in license servers than to strengthening security of DRM processes.

The needs for potentially flexible and reliable solutions in further securing DRM implementations remain therefore high, in particular in terms of dynamic provisioning and of customized protection.

### SUMMARY

A purpose of the present disclosure is to provide a DRM system potentially enabling flexible and reliable provisioning, dynamically over time.

Further objects of the present disclosure pertain to such solutions applicable at a DRM client device side as well as at a DRM server side, in a consistent way.

The present disclosure is also directed to DRM solutions backward compatible with existing DRM systems, thereby enabling enhancements of legacy implementations, in a potentially flexible and reliable manner.

In some configurations, the present disclosure may enable adding diversity, renewability and hardware robustness to existing DRM systems.

### Preliminary definitions

In the present disclosure, ***"digital communications"*** refer to the transfer and reception of data in the form of a digital bitstream or a digitized analog signal, either over a point-to-point or a point-to-multipoint communication channel, or via data recording on a storage medium and data retrieval from that medium. Related communication channels may be of any form, e.g. wireless using radio, microwave or infrared spectrum, optical fibers, copper wires, or computer buses. Related storage media may also be of any form, e.g. optical disks, magnetic tapes, HDD (Hard-Disk Drives), SSD (Solid-State Drives), semiconductor memory, flash memory, DNA/RNA molecules.

A **"*server*"** is defined as an entity or a plurality of entities in a communication network, configured for providing information to one or more other network entities called ***"clients"**.* It may be implemented in the frame of a client-server architecture, and may be based on a request-response process.

In the present disclosure, a ***"client device"*** designates an apparatus or system, or a set of apparatus or systems, e.g. an end user, a CPE (for Customer-Premises Equipment) or a home network, configured for getting information from a server, possibly in the frame of a client-server architecture. Wherever not ambiguous, the client device will often be designated below merely as a "device". The client device may be identified by one or more device IDs (Identifiers) pertaining to individual data of the device itself and/or of a device user, which may e.g. by exploited in communicated certificates.

***"Digital Rights Management"*** of ***"DRM"*** concerns the management of legal access to digital contents, using Technological Protection Measures such as notably access control and encryption.

A ***"DRM License"*** designates a data structure containing DRM access information, such as e.g. one or more decrypting key, enabling access to protected data, and conditions for use of those data. That data structure is itself protected in terms of confidentiality and integrity.

***"Provisioning"*** designates the preparation and/or equipment of a network or of network nodes or entities (e.g. computer network hosts, headends, servers, clients) adapted to services to be provided. It may notably include settings, configuration and/or hardware or software resource allocations, and in a client-server architecture, may in particular concern clients as well as servers. The term provisioning has presently an extensive meaning not limited to initial configuration and may thus be dynamic, i.e. adaptable over time and amounting to updating. DRM provisioning refers more specifically to provisioning applied to entities involved in DRM operations.

***"Customization"*** presently refers to the tailoring of services, applications and/or data to specific DRM entities, which may include particular client devices/users or groups or types of client devices/users, and/or particular DRM license servers or groups or types of license servers. Customization may amount to personalization where the customization accommodates specific client devices and/or client users, though not limited to such configurations.

A **"*key*"** is defined as a piece of information that can decrypt or encrypt data when processed through a cryptographic algorithm.

The ***"protection"*** of an object by a key, e.g. of an audiovisual content, a software program or another key, means that the protecting key is encrypting some access to the object. This access protection may be direct, e.g. by encryption of the object with the key, in which case the decryption associated with the protecting key provides the unprotected object. The access protection may instead by indirect, via one or more intermediary keys, in particular in a hierarchical chain of keys. A ***"content key"*** (or ***"content-access key"***) is a key directly protecting access to one or more contents. The content key may be a ***"CEK"*** or ***"content-**encryption **key"*** configured for the encryption of the contents themselves. It may instead be an ***"entry-locking key",*** protecting an entry to a space or channel from which the contents can be retrieved, e.g. via reading, downloading or streaming. In this respect, the content key may protect locally or remotely stored contents.

A ***"key encryption key"*** or *"**KEK"*** is a key protecting another key that is itself protecting access to contents, either directly or indirectly, i.e. via one or more key encryption levels.

A ***"service key"*** refers to a KEK used to protect content keys so as to safeguard access to one or more contents within a service. The service key may group access to two or more contents within a content service, or possibly apply to a unique content. The service key may further be exploited for direct encryption of content keys, or for indirect protection of content keys via the encryption of one or more other service keys.

A ***"domain key"*** refers to a KEK grouping access to one or more contents by two or more devices, i.e. within a device domain. In some modes of the present disclosure, the domain key may also even apply to a unique device via at least an intermediary content key. The domain key may further be exploited for direct encryption of content keys, or for indirect protection of content keys via the encryption of one or more other domain keys.

A ***"group-related key"*** is presently defined as a KEK protecting access to one or more contents associated with a group of one or more content keys. The group-related key may be a service key or a domain key. It may be a KEK used to protect a domain key for a given service, which will be considered below as a service key. It may be a KEK used to protect a service key for a given device domain, which will be considered below as a domain key.

The term ***"deprotection"*** of a protected object will be generally used below for designating protection removal or clearance, and may include any proper decryption operations. When deprotection is applied to objects locked by a protection function, it may involve a deprotection function corresponding to a reversal of the protection function. Also, the deprotection may be complete or partial, e.g. by removing a higher-level encryption layer, or by retrieving an encrypted group-related key through decrypting a root license.

***"Porting"*** means software adaptation relevant to a different hardware and/or software environment than the one for which the original software was designed, e.g. in terms of processors, operating systems or libraries.

A ***"Trusted Execution Environment"*** or ***"TEE"*** consists in a secure area of a main processor, ensuring confidentiality and integrity to the programs and data loaded inside it. It usually involves a hardware isolation mechanism.

A ***"Secure Element"*** or ***"SE"*** is a secure OS (Operating System) in a dedicated hardware component (tamper-resistant chip or secure component) providing secure isolation, storage and processing for hosted applications, based on dedicated processor, storage and memory capacities. An SE thus differs from a TEE by integrated autonomous hardware resources. In this respect, TEE may comparatively offer more functionalities while SE may provide increased security.

A ***"key-protection function"*** is a set of instructions defining an operation or operations to be executed on at least one key, e.g. on a content-access key or a group-related key, so as to have it protected by encryption. It may notably have the form of executable instructions, pseudocode or JavaScript. The function may be executed indirectly on the keys, notably via one or more parameters representative of those keys.

The terms **"*adapted*"** and ***"configured"*** are used in the present disclosure as broadly encompassing initial configuration, later adaptation or complementation of present devices, or any combination thereof alike, whether effected through material or software means (including firmware).

The term **"*processor*"** should not be construed to be restricted to hardware capable of executing software, and refers in a general way to a processing device, which can for example include a computer, a microprocessor, an integrated circuit, or a programmable logic device (PLD). The processor may also encompass one or more Graphics Processing Units (GPU), whether exploited for computer graphics and image processing or other functions. Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM (Read-Only Memory). Instructions may be notably stored in hardware, software, firmware or in any combination thereof.

Additional terms will be defined, specified or commented wherever useful throughout the following description.

### Objects of the disclosure

An object of the present disclosure is notably a DRM license server configured for conditionally authorizing access by a client device to available protected contents upon receiving a license request from the device. The license request includes:
- at least one input adapted to receive the license request from the device, and at least one encryption key associated with the device and adapted to be exploited by the license server for protecting access information to the protected contents,
- at least one processor configured for conditionally validating the license request if related authorization conditions are met and, if the license request is validated, for generating protected access information from the access information by protecting the access information with the device-associated key(s) and with at least one security function available to the license server independently from the received license request, and for generating a license containing the protected access information,
- at least one output adapted to send the license to the device.

According to the disclosure, the license request including server-directed security elements: the processor(s) is/are configured for protecting the access information by exploiting the server-directed security elements so as to generate pre-protected access information, and for applying to that pre-protected access information the security function(s) with the device-associated key(s) so as to generate the protected access information.

The device-associated encryption key, or one of the device-associated encryption keys, may be a usual DRM transport key, as known to a skilled person. It may be a public key of a key pair, which includes a private key available to the client device and used for related encryption. It may instead be a symmetric key or a shared secret. It may be transmitted to the license server by the client device via the license request. In variants, it is retrieved from a server having collected public encryption keys from multiple devices.

The access information to the protected contents may include one or more content keys. It may instead or in addition include one or more group-related keys, such as service keys and/or domain keys.

The pre-protected access information may be associated with a simple license, or with a root license in a license chain.

The server-directed security elements may involve secret data, configuration information, software, keys and/or DRM functions. They may be directly applied to the access information, e.g. as protection functions and/or associated data used for encryption of simple licenses, or of leaf, intermediary and/or root licenses in license chains. In variants, the server-directed security elements include signalization enabling to retrieve such protection functions and/or associated data, e.g. via links to storage spaces.

Remarkably, the server-directed security elements introduce an intermediary encryption layer in the license server, which may dynamically supplement, complement or alter a usual DRM protection layer. This may further be done while ensuring compatibility with operational DRM platforms.

Also significantly, those server-directed security elements are obtained within the license request from the device, which may potentially offer quite flexible updating of the access information protection beyond usual provisioning of the license server by a DRM system, and ensure consistency between access information protection in the license server and corresponding extraction of the protected access information in the client device.

In addition, obtaining the server-directed security elements via the license request from the device may offer proper synchronization of DRM operations between the client device and the license server.

The disclosed DRM license server diverges from the existing solutions, which are not suited to consistent modifications of the security elements in the digital rights management license server and client, involve a filtering system upstream of the license servers based on prestored information, or rely on a limited preset number of adjustments of those security elements in DRM client devices without impact on the license server functionalities. By contrast, the present solution involves the combined exploitation of the security function and device-associated key available to the license server with the server-directed security elements received from the client device.

Surprisingly, modifications may thus be introduced in the security process taking place in the license server via the involved client devices. Also, the latter may themselves be provisioned with the server-directed security elements together with corresponding client-directed security elements from a provisioning server, thereby preserving consistency with the security process taking place in the involved license servers.

That solution may make possible quite flexible updating, adjustments or safety modifications over time. It may notably strengthen substantially DRM system robustness, by introducing dynamic DRM mechanisms and/or by customizing DRM protection. In particular, it may be used to regularly update custom function logics to improve security by using a diversified proactive renewability mechanism.

More specifically, the disclosure may offer a way of extending DRM capabilities in clients, by interfacing existing legacy DRM with any kind of TEE and/or SE adapted to receive custom ization functionalities, whether standard or proprietary, hardware or software.

This may further be implemented with introduced customized functions, e.g. per device model. Also, those functions may remain secret and be e.g. unknown to DRM providers, OEMs and service providers, while ensuring backward compatibility and clean dependencies at the license server side.

In some implementations, the server-directed security elements include a software code, a secret and/or server provisioning data.

In other implementations, which may be combined with the previous ones, the server-directed security elements include a signalization enabling to access a software code, a secret and/or server provisioning data.

In some modes, the license request includes a client digital certificate containing the device-associated key(s) and the server-directed security elements.

The digital certificate may prove a particularly efficient and flexible way of transmitting the concerned security elements from a client device to the license server, while potentially relying on existing DRM systems.

In a first type of applications, particularly relevant to simple or leaf DRM licenses, the access information including one or more content-access key(s) and the server-directed security elements involving one or more key protection function(s):
the processor(s) is/are configured for applying the key protection function to the content-access key(s) so as to produce part or all of the pre-protected access information.

According to some modes of those applications, the server-directed security elements further involve server provisioning data adapted to be exploited by the license server in applying the key protection function(s) to the content-access key(s).

In a second type of applications, particularly relevant to root and intermediary DRM licenses in a license chain-, the access information including one or more key-encryption key(s) and the server-directed security elements involving one or more key protection function(s):
the processor(s) is/are configured for applying the key protection function(s) to the key-encryption key(s) so as to produce part or all of the pre-protected access information.

Such a hierarchical protection may offer enhanced flexibility and efficient rights management tools applied to groups of contents (services) and/or to groups of devices (domains).

A hierarchy of rights allotted to various clients may thereby be processed while reducing the required resources for rights verification and/or allowing accelerated DRM processing. The increased resulting complexity may be addressed by a relevant key ladder follow-up.

This may prove notably relevant to linked services or contents, e.g. in the frame of interactive television (i.e. ITV) through distinct accesses to related video, audio and interactive DRM-protected services.

The first and second types of applications may be advantageously combined in any feasible implementations for DRM license chains, so that customized key protection functions can be applied to the content access keys in leaf licenses and to the key-encryption keys in the root key and possibly in intermediary licenses. In some modes with license chains in the first and/or second type of applications, the key protection functions are applied via seeds, which are used as parameters representative of group-related keys. Such a seed may be representative of a group-related key to which the key protection function is applied in a root license or an intermediary license and/or of a group-related key applying to a content key in a leaf license or to another group-related key in an intermediary license. The exploitation of seeds may be particularly useful for building on a legacy DRM license chain system in which they are already relied on.

Deprotection functions corresponding to the protection functions in the first and second types of applications may be consistently provided in the client device.

The disclosure also pertains to a method for conditionally authorizing access by a DRM client device to available protected contents upon receiving a license request from the device, using one or more encryption key(s) associated with the device and adapted to be exploited for protecting access information to the protected contents. The method is executed by one or more processor(s) and includes:
- receiving the license request from the device,
- conditionally validating the license request if related authorization conditions are met,
- if the license request is validated, generating protected access information from the access information by protecting the access information with one or more security function(s) available independently from the received license request and with the device-associated key(s), generating a license containing the protected access information, and send the license to the device.

According to the disclosure, the license request including server-directed security elements, the method for conditionally authorizing access includes protecting the access information by exploiting the server-directed security elements so as to generate pre-protected access information, and applying to that pre-protected access information the security function(s) with the device-associated key(s) so as to generate the protected access information,

That method for conditionally authorizing access is advantageously executed by a license server according to any of its disclosed embodiments.

Another object of the disclosure is a DRM device associated with a DRM client securing access control to available protected contents. The device includes:
- at least one input adapted to receive a license containing access information to the protected contents from a license server, the access information being protected with at one or more encryption key(s) associated with the device and with one or more security function(s),
- at least one processor configured for extracting the access information by applying to the protected access information one or more security reversal function(s) corresponding to the security function(s) with one or more device-associated decryption key(s) corresponding to the device-associated encryption key(s), and for enabling access to the protected contents based on the extracted access information,
- at least one output adapted to communicate a license request to the license server for obtaining the license, the security function(s) being available to the license server independently from the license request.

According to the disclosure:
- the input(s) is/are adapted to receive security material suited to dynamically setting the access control to the protected contents,
- the processor(s) is/are configured for deriving from the security material client-directed security elements, generating pre-cleared access information by applying to the protected access information the security reversal function with the device-associated decryption key(s), and extracting the access information from the pre-cleared access information through exploiting the client-directed security elements,

- the output(s) is/are adapted to communicate to the license server, within the license request, server-directed security elements corresponding to the client -directed security elements and derived from the received security material, the server-directed security elements being adapted to be exploited by the license server with the security function(s) and the device-associated encryption key(s) for generating the protected access information.

That digital rights management device is advantageously adapted to receive the license from a license server according to any of the disclosed embodiments.

In some implementations, the processor(s) include(s) one or more first secure part(s) configured for generating the pre-cleared access information by applying to the protected access information the security reversal function(s) with the device-associated decryption key(s), and one or more second secure part(s) configured for extracting the access information from the pre-cleared access information, the first and second secure parts being securely insulated from one another and configured for securely communicating together.

Though other types of DRM devices can be relevant, the present implementations may be particularly suited. Notably, the presence of the two differentiated processing parts may allow enhanced security, through reducing risks of data leakage or breaches due to common processing of the protected access information. More precisely, the exploitation of the second secure part(s) may possibly preserve the first secure part(s) from security vulnerabilities potentially caused by read and write operations. In addition, the disclosed DRM device may possibly be derived from legacy apparatus by adding functionalities corresponding to the second secure part(s) to already present functionalities corresponding to the first secure part(s).

In particular implementations, the second secure part(s) is/are embedded in at least one hardware secure element separated from the first secure part(s).

The client-directed security elements may further involve configuration data and software code adapted to alter at least one functionality of the device.

According to particular implementations:
- the input(s) is/are adapted to receive a digital certificate containing the device-associated encryption key(s) and the server-directed security elements,
- the output(s) is/are adapted to communicate the received certificate to the license server.

Using the digital certificate for communicating the server-directed security elements to the license server together with the device-associated DRM key may prove particularly efficient, since no specific operations may then be required at the client device side other than the usual ones regarding certificate reception from a certifying server and transmission to a license server. Also, the DRM key may then be certified jointly with receiving the client-directed and server-directed security elements, those various entities being exploited in the enhanced DRM solution. In addition, the device-associated DRM key may be transmitted to the license server together with the server-directed elements, thereby facilitating synchronization.

A further object of the disclosure is a DRM device associated with a DRM client securing access control to available protected contents. The device includes:
- means for receiving a license containing access information to the protected contents from a license server, the access information being protected with one or more encryption key(s) associated with the device and with the security function(s),
- means for extracting the access information by applying to the protected access information one or more security reversal function(s) corresponding to the security function(s) with one or more device-associated decryption key(s) corresponding to the device-associated encryption key(s),
- means for enabling access to the protected contents based on the extracted access information,
- means for communicating a license request to the license server for obtaining the license, the security function(s) being available to the license server independently from the license request.

According to the disclosure:
- the DRM device includes means for deriving from the security material client-directed security elements and means for generating pre-cleared access information by applying to the protected access information the security reversal function(s) with the device-associated decryption key(s),
- the means for extracting are configured for extracting the access information from the pre-cleared access information through exploiting the client-directed security elements,
- the means for communicating are adapted to communicate to the license server, within the license request, server-directed security elements corresponding to the client-directed security elements and derived from the received security material, the server-directed security elements being adapted to be exploited by the license server with the security function(s) and the device-associated encryption key(s) for generating the protected access information.

The disclosure also concerns a method for securing access control to available protected contents by a DRM client device. The method is executed by one or more processor(s) and includes:
- receiving a license containing access information to the protected contents from a license server, the access information being protected with one or more security function(s), and with one or more encryption key(s) associated with the device,
- extracting the access information by applying to the protected access information one or more security reversal function(s) corresponding to the security function with one or more decryption key(s) corresponding to the encryption key(s), and for enabling access to the protected contents based on the extracted access information,
- communicating a license request to the license server for obtaining the license.

According to the disclosure, the method for securing access control includes:
- receiving security material suited to dynamically setting the access control to the protected contents,
- deriving from the security material client-directed security elements, generating pre-cleared access information by applying to the protected access information the security reversal function(s) with the decryption key(s), and extracting the access information from the pre-cleared access information through exploiting the client-directed security elements,
- communicating to the license server, within the license request, server-directed security elements corresponding to the client-directed security elements and derived from the received security material, the server-directed security elements being adapted to be exploited by the license server with the security function(s) and the encryption key(s) for generating the protected access information.

The method for securing access control is advantageously executed by a DRM device according to any of the disclosed embodiments.

Another object of the disclosure is a provisioning server configured for provisioning one or more DRM client device(s) with security material suited to dynamically setting access control of the device(s) to protected contents. The access control is based on access information to the protected contents received by the device(s) from one or more license server(s) and protected with one or more encryption key(s) associated with the device(s) and one or more security function(s), the protected access information being subject to protection reversal by the device(s) with one or more decryption key(s) corresponding to the encryption key(s) and with one or more security reversal function(s) corresponding to the security function(s). The provisioning server includes:
- at least one input adapted to receive the security material, identification data of the device(s) and identification data of the server(s), and a request for communicating the security material to the device(s),
- at least one processor configured for checking whether the device(s) is/are authorized to obtain the security material,
- at least one output adapted to communicate the security material to the device(s) if the device(s) is/are authorized.

According to the disclosure, the communicated security material is suited for the device(s) to derive client-directed security elements adapted to be exploited by the device for extracting the access information from pre-cleared access information, obtained by applying to the protected access information the security reversal function(s) with the decryption key(s), through exploiting the client-directed security elements. The communicated security material is also suited to derive server-directed security elements corresponding to the client-directed security elements, to be transmitted from the device(s) to the license server(s) and adapted to be exploited by the license server(s) with the security function(s) and the encryption key(s) for generating the protected access information. The security function(s) is/are available to the license server(s) and the security reversal function is/are available to the device(s) independently from the communicated security material.

The provisioning server is advantageously adapted to provision a DRM device according to any of the disclosed embodiments.

A further object of the disclosure is a method for provisioning one or more DRM client device(s) with security material suited to dynamically setting access control of the device(s) to protected contents. The access control is based on access information to the protected contents received by the device(s) from one or more license server(s) and protected with one or more encryption key(s) associated with the device(s) and one or more security function(s), the protected access information being subject to protection reversal by the device(s) with one or more decryption key(s) corresponding to the encryption key(s) and with one or more security reversal function(s) corresponding to the security function(s). The provisioning method is executed by one or more processor(s) and includes:
- receiving the security material, identification data of the device(s) and identification data of the server(s), and a request for communicating the security material to the device(s),
- checking whether the device(s) is/are authorized to obtain the security material,
- communicating the security material to the device(s) if the device(s) is/are authorized.

According to the disclosure, the communicated security material is suited for the device(s) to derive client-directed security elements adapted to be exploited by the device for extracting the access information from pre-cleared access information, obtained by applying to the protected access information the security reversal function(s) with the decryption key(s), through exploiting the client-directed security elements. The communicated security material is also suited to derive server-directed security elements corresponding to the client-directed security elements, to be transmitted from the device(s) to the license server(s) and adapted to be exploited by the license server(s) with the security function(s) and the encryption key(s) for generating the protected access information. The security function(s) is/are available to the license server(s) and the security reversal function is/are available to the device(s) independently from the communicated security material.

That method for provisioning is advantageously adapted to be executed by a server for provisioning compliant with the disclosure.

The DRM license server, client device and provisioning server according to the disclosure may thus provide a consistent set of objects allowing downstream communication of relevant DRM data from the originating provisioning server to the target license servers through the target client devices, in a potentially flexible, efficient and convenient way. That DRM set may draw on existing legacy DRM systems in a streamlined way. In addition, the provisioning server may itself be fed with the security elements by one or more SoC provider(s).

The disclosure further pertains to a structured dataset adapted to be transmitted from a DRM client device to a DRM license server within a license request for protecting access information to be provided to the device by the license server in a license.

According to the disclosure, the structured dataset includes server-directed security elements adapted to be exploited by the license server in combination with at least one device-associated encryption key, and with at least one security function available to the license server independently from the received license request, by exploiting the server-directed security elements for generating pre-protected access information and by applying the security function(s) to the pre-protected access information with the device-associated encryption key(s) so as to generate the protected access information.

In some advantageous implementations, the structured dataset is adapted to be transmitted to the license server(s) in the form of a digital device certificate including the device-associated encryption key.

Accordingly, the disclosure also relates to a license request and to a digital device certificate including a structured dataset compliant with the disclosure.

In alternative implementations, at least part of the structured dataset is independent from a digital device certificate. Advantageously then, part or all of the server-directed security elements are independent from a digital device certificate.

While involving increased complexity and requiring more development resources on the ground of currently exploited DRM systems, such a structured dataset may offer additional potentialities in terms of protection functionalities and configurations.

The present disclosure also concerns a computer program comprising software code adapted to perform a method for conditionally authorizing access, a method for securing access control or a method for provisioning, according to any of their execution modes when that software code is executed by a processor.

The disclosure further pertains to a non-transitory program storage device, readable by a computer, tangibly embodying a program of instructions executable by the computer to perform a method for conditionally authorizing access, a method for securing access control or a method for provisioning, compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM, an EPROM (Erasable Programmable ROM), a Flash memory, a portable CD-ROM (Compact-Disc ROM).

### LIST OF FIGURES

The present disclosure will be better understood, and other specific features and advantages will emerge upon reading the following description of particular and non-restrictive illustrative embodiments, the description making reference to the annexed drawings wherein:
**Figure 1** illustrates a DRM system involving a device, a content provider and a license server;
**Figure 2** is a schematic representation of a simple license transmitted by the license server to the device of figure 1, in a first implementation;
**Figure 3A** shows groups of contents involved in DRM management with the system of figure 1, in a second implementation based on content services;
**Figure 3B** shows groups of devices involved in DRM management with the system of figure 1, in a third implementation based on device domains;
**Figure 4A** is a schematic representation of a root license and leaf licenses in a group-related license chain transmitted by the license server to the device of figure 1, corresponding to the second implementation of figure 3A;
**Figure 4B** is a schematic representation of leaf licenses in a group-related license chain transmitted by the license server to the device of figure 1, corresponding to the third implementation of figure 3B;
**Figure 4C** is a schematic representation of a root license and an intermediary license in the group-related license chain of figure 4B transmitted by the license server to the device of figure 1, corresponding to the third implementation of figure 3B;
**Figure 5** shows some determining aspects of the device of figure 1;
**Figure 6** diagrammatically shows an apparatus integrating the functions of the device of figures 1 and 5;
**Figure 7** diagrammatically shows an apparatus integrating the functions of the license server of figure 1;
**Figure 8** is a block diagram schematically representing functionalities of the license server of figures 1 and 7;
**Figure 9** represents content key protection operations for a simple license carried out by the license server of Figure 1 in relation with the first implementation represented on figure 2;
**Figure 10A** represents group-related key protection operations for a root license in a license chain, carried out by the license server of Figure 1 in relation with the second or third implementation represented on figure 3A or 3B and on figure 4A or 4C;
**Figure 10B** represents content key protection operations for a leaf license in a license chain, carried out by the license server of Figure 1 in relation with the second or third implementation represented on figure 3A or 3B and on figure 4A or 4B;
**Figure 11** represents group-related key protection operations for an intermediary license in a license chain, carried out by the license server of Figure 1 in relation with the third implementation represented on figure 3Aand on figure 4C;
**Figure 12** shows a variant of the DRM system of figure 1, involving a download server;
**Figure 13** shows DRM provisioning aspects of the device represented on figure 1, involving a provisioning server;
**Figure 14** shows a variant of the DRM provisioning aspects of figure 13, involving a download server;
**Figure 15** diagrammatically shows an apparatus integrating the functions of the provisioning server of figure 13;
**Figure 16** illustrates a DRM system adapted to data pre-loading operations, corresponding to the DRM system of figure 1, and involving the provisioning server of figure 13, an attestation validation server and a SoC implementation server;
**Figure 17** diagrammatically shows an apparatus integrating the functions of the attestation validation server of figure 16;
**Figure 18** diagrammatically shows an apparatus integrating the functions of the SoC implementation server of figure 16;
**Figure 19** illustrates a DRM system adapted to bootstrap operations, corresponding to the DRM system of figure 1 and figure 16, and involving the provisioning server, the attestation validation server and the SoC implementation server;
**Figure 20** shows operations carried out by the provisioning server in the bootstrap operation system of figure 19;
**Figure 21** shows operations carried out by the device of figure 1 in device remote provisioning;
**Figure 22** illustrates a DRM system adapted to device remote provisioning operations, corresponding to the DRM systems of figures 1, 16 and 19, and involving the provisioning server, the attestation validation server and the SoC implementation server;
**Figure 23** shows operations carried out by the provisioning server in the bootstrap operation system of figure 22;
**Figure 24A** is the first part of a flow chart showing successive steps executed within the DRM systems of figures 1, 16, 19 and 22, in proceeding with data pre-loading, bootstrap operations and device remote provisioning;
**Figure 24B** is the second part of the flow chart showing successive steps executed within the DRM systems of figures 1, 16, 19 and 22, in proceeding with content access, and content consumption.

On the figures, the drawings are not to scale, and identical or similar elements are designated by the same references.

### ILLUSTRATIVE EMBODIMENTS

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein may represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

Also, each of the servers below is advantageously an apparatus, or a physical part of an apparatus, designed, configured and/or adapted for performing the mentioned functions and produce the mentioned effects or results. In alternative implementations, any of those servers is embodied as a set of apparatus or physical parts of apparatus, whether grouped in a same machine or in different, possibly remote, machines. Those servers may e.g. have functions distributed over a cloud infrastructure and be available to users as a cloud-based service, or have remote functions accessible through an API (for Application Programming Interface).

Each of the servers below may further be connected to one or more local or remote database(s), from which information can be retrieved or received and into which information can be recorded. The database(s) can take the form of storage resources available from any kind of appropriate storage means, which can be notably a RAM or an EEPROM (Electrically-Erasable Programmable Read-Only Memory) such as a Flash memory, possibly within an SSD (Solid-State Disk). In variant implementations, relevant information may be transmitted to the server via a telecommunication network, e.g. streamed to the server.

Any of the devices and servers mentioned below may include a user interface and/or display capacities, whether expressly mentioned or not. Such a user interface includes any means appropriate for entering or retrieving data, information or instructions, notably visual, tactile and/or audio capacities that can encompass any or several of the following means as well known by a person skilled in the art: a screen, a keyboard, a mouse, a trackball, a touchpad, a touchscreen, a loudspeaker, a webcam, a voice recognition system. As for the display devices, they may for example involve LCD (for Liquid-Crystal Display) or plasma screens, or video-projectors, and may notably be adapted to the display of delivered or unlocked contents and/or of digital communications associated with DRM operations. They may be integral components of the concerned devices/servers. They may instead be external to those devices/servers and connected thereto by a cable or wirelessly for transmitting display signals, via an interface for transmission or connection adapted to transmit a display signal to an external display means.

In addition, the various mentioned communication networks may notably involve one or more wired (e.g. optical fiber, Ethernet), wireless (e.g. terrestrial or satellite broadcast, WiFi, WiMax - standing for Worldwide interoperability for Microwave Access, Bluetooth) and/or cellular telecommunication (e.g. UMTS - standing for Universal Mobile Telecommunications System, LTE - standing for Long-Term Evolution, 5G) networks. Communications between two DRM entities may be via a bidirectional communication network, or via two or more communication networks of which at least one is unidirectional (e.g. terrestrial broadcast) so as to allow two-way exchanges between the entities.

Even though the securing of operations is not always mentioned or visible on the drawings, all exchanges between entities, notably over communication networks or with external sources, recipients or databases, may involve authentication and/or encryption. In particular, key exchange procedures may be implemented in public key infrastructures (PKI), and public keys or shared session keys may be relied on, as well known to a skilled person. Securing the transmission of any sensible information may notably be considered as implicit if not explicit, throughout the disclosure.

In addition, any of the disclosed devices and servers, even if not represented on the figures, may further include internal security provisions and mechanisms suited to protecting confidential data, such as notably used keys. Those mechanisms may in particular apply to internal exchanges (e.g. over buses) and/or to stored data.

### DRM operations

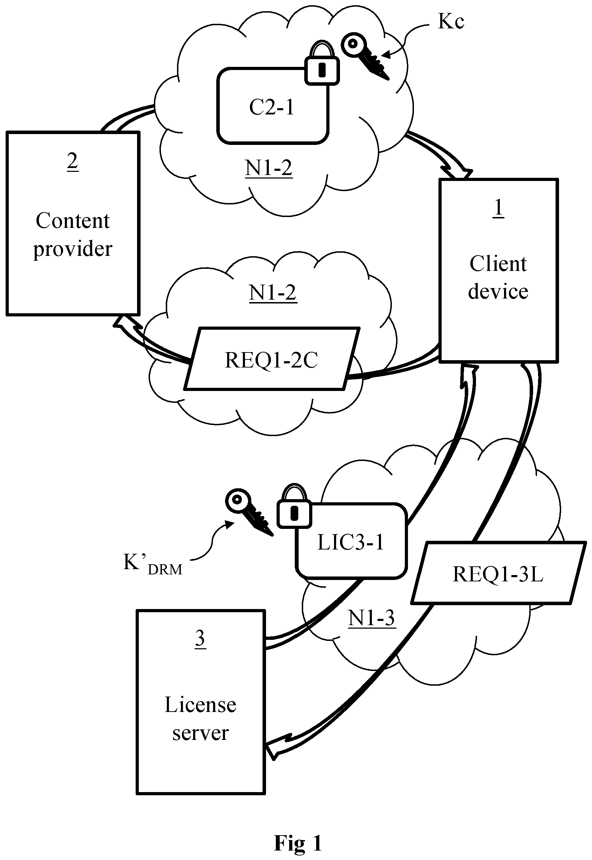

The present disclosure pertains to the access by a device 1 to contents C2-1 available from one or more content provider 2, which contents C2-1 may be provided via one or more communication network N1-2, as illustrated on **Figure 1****.** One or more service providers may be involved instead of, or in addition to, the content provider 1.

The communication network N1-2 may consist of or include one or more wired (e.g. cable, optical fiber, Ethernet), wireless (e.g. WiFi, WiMax) and/or cellular (e.g. UMTS, LTE, 5G) network.

The device 1 may correspond to a consumer product (e.g. a workstation, an STB - standing for set-top box, a laptop, a tablet, a smartphone, a video game console, a head-mounted display - HMD, a television set such as notably a smart TV) or a CPE (standing for customer-premises equipment, e.g. a residential gateway or an Internet access gateway).

The content provider 2 may be adapted to transmit simultaneously the contents C2-1 to multiple consumers, and potentially to a large number of them. For example, the content provider 2 may transmit the contents C2-1 by broadcast via terrestrial, cable or satellite communications, or by multicast via IPTV (for Internet Protocol Television) or multipoint videoconferencing. In other embodiments, it is adapted to provide the contents C2-1 by unicast transmissions, e.g. via TCP/IP (for Transmission Control Protocol / Internet Protocol) or UDP (for User Datagram Protocol).

The contents C2-1 may include audio, video, photos, text, data, metadata, software, or any other kind of information of interest to a user of the device 1. They may be transmitted continuously (e.g. a broadcast program), intermittently (e.g. chat messages) or punctually (e.g. a data file).

In some embodiments, the device 1 is configured for transmitting to the content provider 2 a request REQ1-2C to obtain the access to the contents C2-1. The request may be communicated via the same bidirectional network N1-2 as used for the transmission of the contents C2-1 (e.g. an optical fiber network) or via a different communication network within the networks N1-2, so that content communication may notably be carried out via a unidirectional network. For example, the device 1 is adapted to provide the request REQ1-2C to the content provider 2 via a cell phone network and to receive the contents C2-1 via terrestrial broadcasting. The request REQ1-2C may be sent once only, upstream of a content transmission start, or may be need to be sent repeatedly over time to retrieve progressive content transmission (e.g. video or online games).

In alternative implementations, instead of being communicated through the network N1-2, the contents C2-1 are available to the device 1 in a non-transitory storage unit previously loaded by the content provider 2, which may be e.g. an electronic, magnetic, optical, electromagnetic, infrared, or semiconductor device (e.g. a flash memory, a hard disk, a ROM, an EPROM, a portable CD-ROM).

The content provider 2, or a dedicated protection player acting for the content provider 2, is configured for locking access to the contents C2-1 by means of one or more encryption barriers, so that in order to access the contents C2-1, i.e. to be able to consume them, the device 1 needs to overcome those barriers.

In particular DRM embodiments, the contents C2-1 are encrypted with one or more content-encryption key (i.e. CEK) Kc, so that the device 1 can receive or retrieve the contents C2-1, e.g. via a broadcast network or IPTV, but is unable to exploit them without properly decrypting them with the relevant key Kc.

The contents C2-1 may be encrypted with the same single key Kc, so that once the latter is known, all of the contents C2-1 can be properly decrypted. They may instead be encrypted successively with various items of the keys K_{c}, e.g. associated with slicing the protection of a broadcast program over time. The device 1 is then able to dynamically decrypt the full range of the contents C2-1 only if it can get the successive involved keys Kc.

Also, instead of relying on one single instance of the key Kc with a one-shot encryption barrier, or on one single instance at a given time with dynamic encryption barriers, content encryption may be based on multiple parallel items of the key Kc pertaining to the same contents C2-1. For example, the contents C2-1 may include a video movie having two or more resolution levels or color ranges, a video game having various difficulty levels, a database comprising hierarchized or nested data sets, or a software suite based on a variable number of components, each of which is associated with a different item of the keys Kc. Depending on the keys Kc in their possession, the users of the device 1 may then access the entire pack or only a partial version of the available contents C2-1.

In other DRM implementations, the access to the contents C2-1 is locked by an entry barrier preventing the device 1 from obtaining the contents C2-1 without appropriate authorization, whether those contents C2-1 are themselves encrypted (or otherwise protected) or not. The entry barrier may rely on a keying mechanism such as one relying on one or more keys, also designated here as Kc for convenience. Those keys Kc may themselves be multiple, e.g. by changing over time so as to enable dynamic security checking, and/or by giving access to various aspects or refinement levels of the same contents C2-1.

The keys Kc will be generally designated below as content-access keys, or as content keys.

A DRM system potentially enabling the device 1 to access the contents C2-1 includes one or more DRM license server 3, in charge of checking the rights of the device 1 upon request and of providing it with required access information where appropriate. That access information usually takes the form of one or more DRM license LIC3-1 which may notably contain the key Kc enabling access to the contents C2-1. Consistently, the device 1 may require access to the contents C2-1 from the content provider 2 by transmitting a license request REQ1-3L to the license server 3. Also, the device 1 and the license server 3 may interact through one or more communication network N1-3.

Since DRM licenses LIC3-1 transmitted by the license server 3 are intended for specifically authorized device clients and must be carefully preserved from various hacking risks or from grabbing by unauthorized users, appropriate protection of the communicated license LIC3-1 proves pivotal.

In particular, the device 1 may be provided with a device-associated key pair K_{DRM}, K'_{DRM} including a private key K_{DRM} securely stored in a protected part of the device 1, and e.g. recorded on a system-on-chip, i.e. SoC, embedded in the device 1, and a public key K'_{DRM} adapted to be communicated. This key pair K_{DRM}, K'_{DRM} is directed to secure DRM transport between the device 1 and the server 3 over the network N1-3. It may be randomly generated in the device 1 and certified by a provisioning server via a certificate signing request. It may instead be retrieved directly from a provisioning server.

In the following and consistently with the above, the content provider 2 may be considered in various implementations as regularly or continuously in relation with the client device 1, even though not represented on the figures.

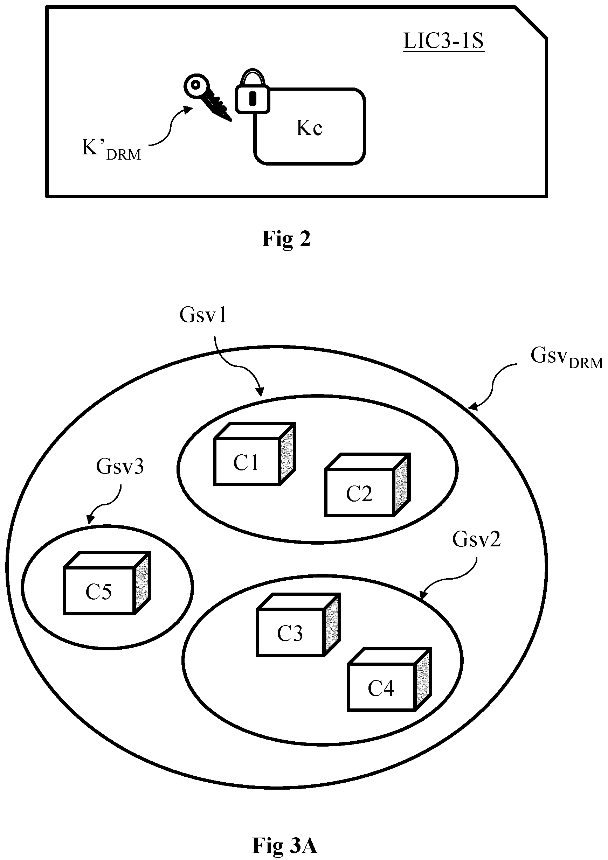

As visible on **Figure 2****,** the access information such as e.g. the content key or a list of content keys Kc may then be protected by the DRM public key K'_{DRM} corresponding to the device private key K_{DRM}, or more generally to a secret or output key derived from the key K'_{DRM}. The resulting protected content key Kc may thus be included in a simple license LIC3-1S to be communicated to the device 1 with a view to secure decrypting based on the private key K_{DRM}. More precisely, the secret may be derived from the DRM key K'_{DRM} by applying to the content key Kc a usual protection UP-S suited to a simple license, such as e.g. one or more key derivation function, i.e. KDF, available to the license server 3.

The device 1 is in possession of the DRM private key K_{DRM} enabling the decryption of the received simple license LIC3-1S so as to extract the requested content key Kc, and hence have access to the contents C2-1. The device 1 may further be provided with usual deprotection UDP-S corresponding to the usual protection UP-S and enabling reverse operations.

Instead of being encrypted on the ground of the mere device-associated key K'_{DRM} itself, the access information may be protected on the ground of an intermediary key, itself protected by the device-associated DRM key K_{DRM}, namely by a key-encryption key (KEK). This two-level protection enables the security level and DRM system safety to be strengthened. In this respect, the intermediary key protected by the device-associated DRM key K'_{DRM} may be communicated by the license server 3 to the device 1 at a first level, and the access information such as e.g. the content key Kc protected by the intermediary key at a second level. Also, respectively same or different methods (e.g. KDFs) may be used for obtaining the keys at the first level and second level.

More than two protection levels may be exploited in a hierarchical chain of keys, each key at one level in the chain starting with the content key Kc being protected by another key at a higher level in the chain, up to the device-associated DRM key K'_{DRM}. The structured relationship between the successive keys in the chain may then be given by a key ladder.

The hierarchical chain of keys may correspond to a license chain, in which a leaf license (at the bottom) contains the content keys, a root license (at the top) enables the set of keys to be unlocked down to the content keys Kc, and optionally intermediary licenses are protecting one or more lower level in the chain down to the content keys Kc and are protected by one or more higher level in the chain up to the DRM key K'_{DRM}.

The exploitation of a license chain may be useful for various reasons, including potentially faster operations involving multiple licenses, while providing greater security by the exploitation of different keys for different contents and offering enhanced flexibility such as e.g. diversified sets of rights and restrictions, pre-generation of protected licenses before provisioning of a given device, and simplified periodic renewal of rights via the root license by using leaf licenses without expiration deadlines.

The device-associated DRM key K'_{DRM} may not have the same nature as the content-encryption keys Kc and the intermediary KEKs, since the former is linked to the device - even though potentially common to a whole set of devices - while the latter are set at the DRM server side. In some example implementations, the device-associated DRM key pair K_{DRM}-K'_{DRM} is of an RSA type (for Rivest-Shamir-Adelman, e.g. a 2048-bit RSA key) or of an elliptic-curve cryptography type (i.e. ECC), while the symmetric CEKs Kc and KEKs are of an AES type (for Advanced Encryption Standard, e.g. 128-bit AES keys).

A key ladder mechanism is e.g. specified for a television (TV) receiver's chipset in ETSI standard TS 103 162 with a view to ensuring that in the presence of diverse network security solutions, a TV receiving device can receive TV content from any TV distribution network.

In particular related embodiments, different groups of contents defined as services are associated with respectively distinct pieces of access information, such as e.g. cryptographic keys. This may correspond to distinct access rights available to the respective groups. Also, a same content may be common to two or more services.

For example, any of the following may be gathered in a same broadcast service pertaining to a movie, a series or a TV programme:
- video, audio and interactivity metadata,
- two or more video and/or audio resolutions,
- two or more video standards, e.g. HEVC (for High Efficiency Video Coding) and H264/AVC (for Advanced Video Coding), and/or audio standards, e.g. HE-HAAC (for High-Efficiency Advanced Audio Coding), Dolby Digital and MP3,
- multiple subtitling and/or dubbing contents,
- several episodes of a same series,
- a movie and associated documentaries.

In other examples, any of the following may be gathered in a same software service, e.g. available in the form of SaaS (Software as a Service) or for download:
- core program plus optional modules,
- same program in two or more programming languages, e.g. C++ and Python.

More generally, a service may group two or more targeted items of any contents and/or types of contents.

In other particular related embodiments, different groups of devices defined as domains are associated with respectively distinct pieces of access information, such as e.g. cryptographic keys. This may correspond to distinct access rights available to the respective groups. Also, a same device may belong to two or more groups. For example, devices may be gathered in a same domain based on users' rights, geographical locations and/or apparatus specificities (such as resolution, video standard and/or audio standard).

For example, the security management of the groups may be operated according to the GDOI cryptographic protocol (for "Group Domain Of Interpretation"), as specified in IETF RFC 6407 standard. Such implementations involve Group Controllers / Key Servers, i.e. GCKS, and the protocol is run between each GCKS and corresponding group members, the latter communicating by the establishment of secure associations among two or more group members. The GCKS can be considered as belonging to the DRM license servers 3. Beyond strengthened security, increased flexibility is thereby possible in taking account of various services.

More generally, a domain may group two or more targeted items of any devices and/or types of devices. Consistently, a domain may group two or more targeted items of any users and/or types of users. In this respect, a device may be associated with one or more users, and a user may be associated with one or more devices.

In a purely illustrative service-oriented case relying on a two-level license chain, as shown on **Figure 3A****,** content items C1, C2, C3, C4 and C5 respectively associated with symmetric content keys Kcc1, Kcc2, Kcc3, Kcc4 and Kcc5 are potentially available to DRM client devices. Each of those content items may itself refer to one or more (possibly numerous) effective contents. Three content groups Gsv1, Gsv2 and Gsv3 correspond respectively to three services, the group Gsv1 encompassing content items C1 and C2, the group Gsv2 encompassing content items C3 and C4, and the group Gsv3 containing the single item C5. Also, the content groups Gsv1, Gsv2 and Gsv3 are respectively associated with symmetric service keys Ksv1, Ksv2 and Ksv3 dedicated to the protection of the related content keys. The content groups Gsv1, Gsv2 and Gsv3 may correspond respectively to three leaf licenses globally protected by three respective service keys (i.e. without linking to the device 1). In addition, the service-related groups Gsv1, Gsv2 and Gsv3 form together an overall content group Gsv_{DRM}, which may be associated with a root license uniquely protecting the service keys Ksv1, Ksv2 and Ksv3 with the device-associated key K'_{DRM} (i.e. specific relation with the device 1).

For sake of example, content items C1 and C2 correspond respectively to video and audio for episodes belonging to a first season of a series, while C3 and C4 correspond respectively to video and audio for episodes belonging to a second episode of the same series, and C5 is related to a documentary about that series. Viewers may then possibly obtain access rights to the first season alone through getting service key Ksv1, to the second season alone through getting service key Ksv2, to the documentary through getting service key Ksv3, or to both seasons together with the documentary as represented on the example.

More than two levels may be chosen for the key ladder or the license chain associated with the services in any relevant way suited to the targeted applications, as known to a skilled person,

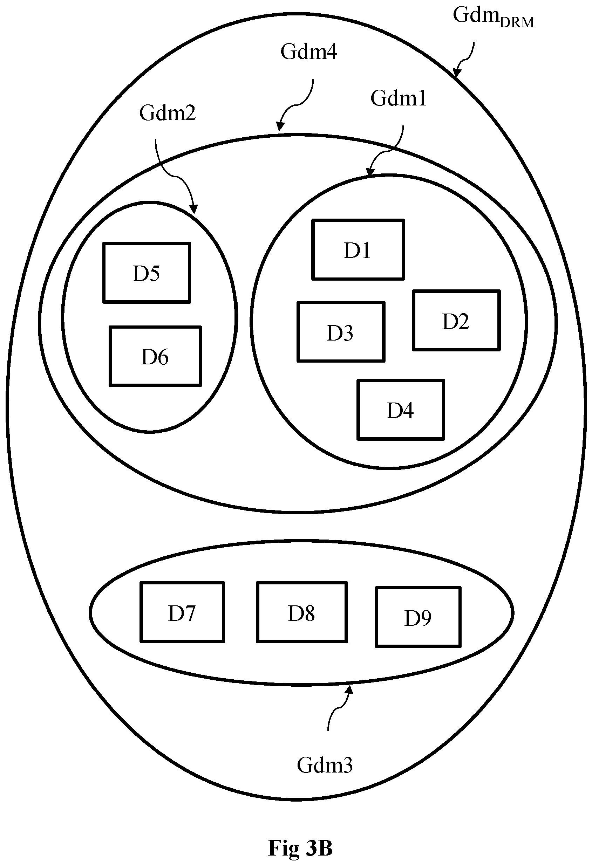

In a purely illustrative domain-oriented case, as shown on **Figure 3B****,** three groups of devices Gdm1, Gdm2 and Gdm3 are respectively associated with symmetric domain keys Kdm1, Kdm2 and Kdm3 dedicated to the protection of relevant content keys in a hierarchical chain of keys. For example, the group Gdm1 comprises device items D1, D2, D3 and D4, the group Gdm2 comprises device items D5 and D6, and the group Gdm3 comprises device items D7, D8 and D9. Each of those device items may itself refer to one or more (possibly numerous) devices. Also, a domain group Gdm4 associated with a symmetric domain key Kdm4 encompasses the two domain groups Gdm1 and Gdm2, according to a three-level key ladder or license chain.

The domain groups Gdm1, Gdm2 and Gdm3 may correspond respectively to three leaf licenses globally protected by three respective service keys, while the domain group Gdm4 may correspond to an intermediary license protected by a further service key. In addition, the domain groups Gdm3 and Gdm4 form together an overall content group Gdm_{DRM}, which may be associated with a root license uniquely protecting the domain keys Ksv3 and Ksv4 with the device-associated key K'_{DRM}.

For sake of example, domain group Gdm3 corresponds to apparatus having low-resolution video capabilities, domain group Gdm1 corresponds to apparatus having high-resolution video capabilities according to a first standard, and domain group Gdm2 corresponds to apparatus having high-resolution video capabilities according to a second standard, the domain group Gdm4 thereby encompassing the apparatus having high-resolution video capabilities according to any of the two standards. By receiving the root license, the device 1 - which may e.g. be a gateway in a home network - may open access to related videos for the whole set of devices D1 to D9.

In variant implementations, a consistent number of levels is required for all elements of a key ladder or a license chain, which may in the present example be two if group Gdm4 is reduced to a single entity (leaf license) or three if an intermediary level containing only one sub-group is introduced between group Gdm3 and the root key K'_{DRM}. Also, any other number of levels may be chosen for the key ladder or the license chain associated with the domains in any relevant way suited to the targeted applications, as known to a skilled person,

Service groups and domain groups may further be combined in any possible way. In particular, a same KEK may e.g. be exploited for referring to a given set of devices in relation with given services. Also, a service key may be protected by a domain key. Conversely, a domain key may be protected by a service key.

In addition, a service group may possibly contain a unique content item, and a domain group may possibly contain a unique device item or be associated with a unique user item.

In what follows and for conciseness, generic notations will be used, by referring to a group-related key "Kg" as a service key Ksv, a domain key Kdm or a KEK combining service and domain features. Accordingly, a group G (e.g. G1, G2, G3) may be a service group Gsv, a domain group Gdm or a combined group mixing service and domain features. Also, keys Kc (e.g. Kc1, Kc2) may refer to any of the exploited content keys.

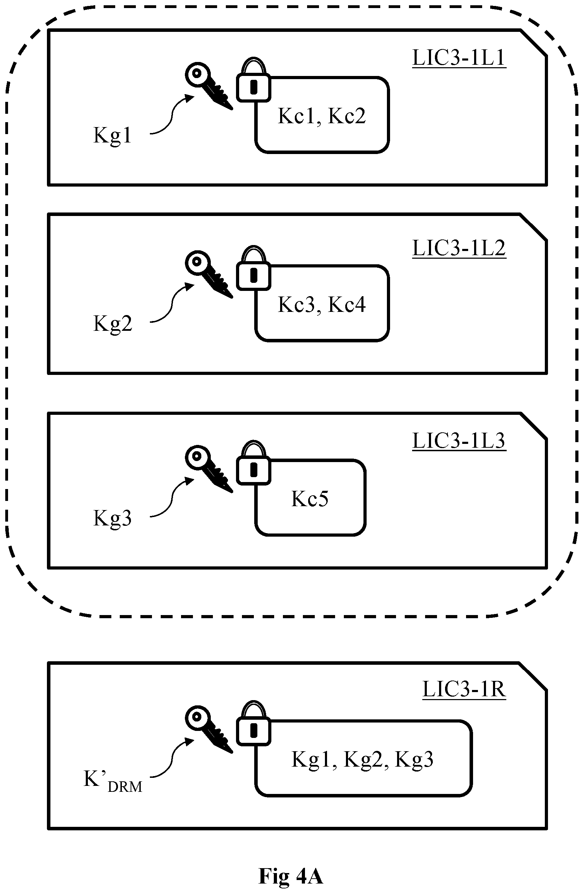

As illustrated on **Figure 4A****,** which may e.g. be mapped to services compliant with the above example of **Figure 3A** for illustration, the device 1 is authorized to access contents protected by content keys Kc1 and Kc2 protected by a group-related key Kg1 associated with a group G1, Kc3 and Kc4 protected by a group-related key Kg2 associated with a group G2, and Kc5 protected by a group-related key Kg3 associated with a group G3, those content keys being communicated by the license server 3 to the device 1 in leaf licenses LIC3-1L1, LIC3-1 L2 and LIC3-1L3 respectively associated with groups G1, G2 and G3. The group-related keys Kg1, Kg2 and Kg3 are protected by the device-associated DRM key K'_{DRM} communicated to the device 1 in a root license LIC3-1R.

Accordingly, the device 1 may extract the group-related keys Kg1, Kg2 and Kg3 by using its private key K_{DRM}, and then the content keys Kc1 to Kc5, and hence the related contents, by using the thereby obtained group-related keys.

For example, the key pair K_{DRM}-K'_{DRM} is ECC-based, while the symmetric CEKs Kc1 to Kc5 and the group-related keys Kg1, Kg2 and Kg3 are AES keys.

In other implementations, a key ladder or license chain is increased to three or more levels by encrypting at least one of the group-related keys with another of the group-related keys.

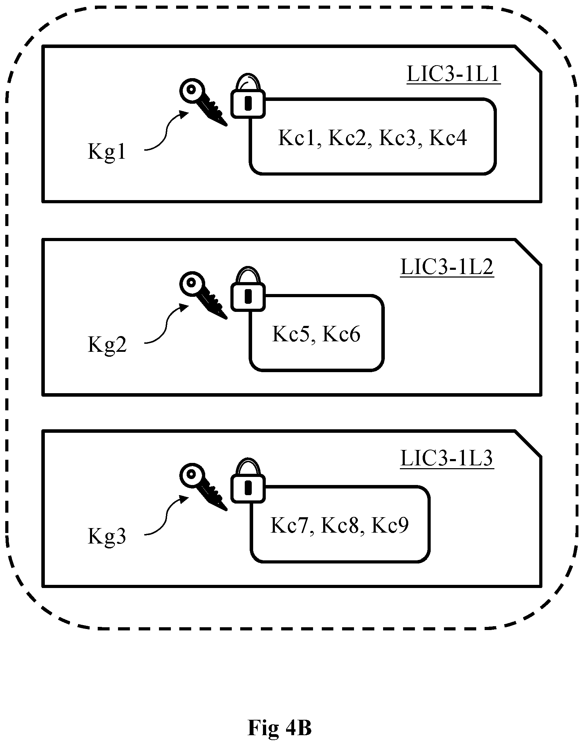

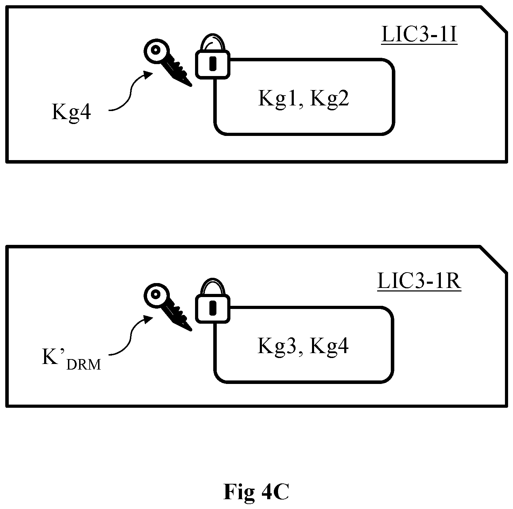

For example, as illustrated on **Figures 4B** and **4C****,** which may e.g. be mapped to domains compliant with the above example of **Figure 3B** for illustration, content keys Kc1, Kc2, Kc3 and Kc4 to be communicated to the device 1 are protected by a group-related key Kg1 in a leaf license LIC3-1L1, content keys Kc5 and Kc6 by a group-related key Kg2 in a leaf license LIC3-1L2, and content keys Kc7, Kc8 and Kc9 by a group-related key Kg3 in a leaf license LIC3-1L3 **(****Figure 4B****).** The group-related keys Kg1 and Kg2 are in turn protected by a group-related key Kg4 in an intermediary license LIC3-1I, the group-related key Kg3 and Kg4 being finally protected by the device-associated DRM key K'_{DRM} in root license LIC3-1R **(****Figure 4C****).**

Those cases are purely illustrative, and any number of content keys, group-related keys, whether service keys and/or domain keys, as well as various protection levels may be implemented.

In some embodiments, access information is based on CEKs (content-encryption keys) and directed to encrypted contents. In alternative embodiments, access information is based on keys enabling to get entry access to the contents C2-1 rather than on keys encrypting them, e.g. for launching a software program or opening a directory. Other implementations combine entry-locking keys and CEKs, whether in accessing different contents some of which through entry-locking keys and others through CEKs, or in securing access to same contents by a strengthened protection cumulating entry-locking keys and CEKs.

In the above systems relying on license chains, the access information is globally protected (i.e. together with a group of devices having the same protection) using the group-related keys Kg in the leaf licenses LIC3-1L, while the group-related keys Kg are uniquely protected (i.e. the protection being dedicated to a given device) in the root licenses LIC3-1R and globally protected in the intermediary licenses LIC3-1I. In this respect, a usual root protection UP-R is applied with the DRM public key K'_{DRM} to the group-related keys Kg in the root licenses LIC3-1R, a usual leaf protection UP-L is applied with the relevant group-related keys Kg to the content keys Kc in the leaf licenses LIC3-1L, and wherever relevant, a usual intermediary protection UP-I is applied with the relevant encrypting group-related keys Kg to the group-related keys Kg to be protected in the intermediary licenses LIC3-1I. The usual protections UP-L and UP-I may all be identical, or differ depending on their leaf or intermediary nature, or the intermediary usual protection may differ according to their level in the license chain.

At the DRM client side, equipped with the DRM private key K_{DRM}, usual deprotections UDP-R, UDP-L and wherever relevant UDP-I are respectively provided for the protection removal of root licenses, leaf licenses and intermediary licenses, by respectively reversing the usual protections UP-R, UP-L and UP-I applied by the license server 3. Typically, once the device 1 has retrieved the highest-level group-related keys Kg in the root license LIC3-1R by using the private key K_{DRM} and the usual root deprotection UDP-R, it is in a position to exploit those keys Kg with the usual intermediary/leaf deprotections UDP-I and UDP-L for unlocking the next group-related keys Kg down the license chain, and so on down to the content keys Kc.

More will be developed below about the particular way the access information is protected by the license server 3 before being communicated to the client device 1 in the license LIC3-1, and deprotected by the device 1 once received in a protected form, beyond the above-presented generic aspects involving usual protections and deprotections.

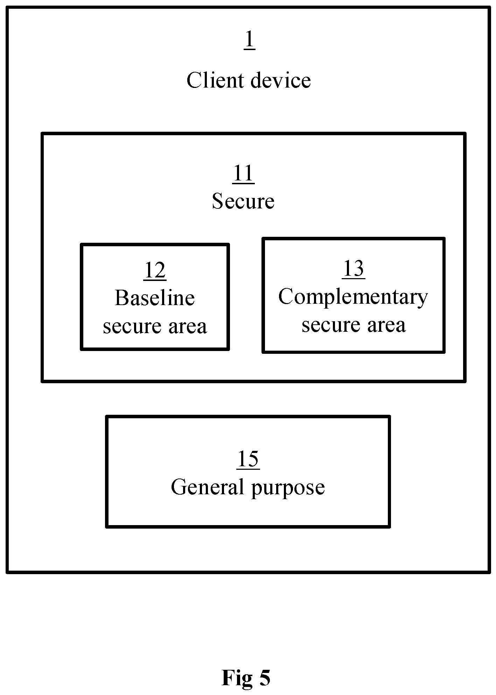

In this respect, as shown on **Figure 5****,** the device 1 includes notably a secure part 11 having proper computing and storage capacities, in addition to a general-purpose part 15 directed to usual tasks and possessing own computing and storing material. The secure part 11 is basically protected with respect to confidentiality and integrity, and may notably contain the DRM private key K_{DRM} and be provided with cryptographic computation capacities, adapted to be used for decrypting received DRM messages. The secure part 11 may e.g. take the form of one or more TEE (Trusted Execution Environment) and/or SE (Secure Element).

The secure part 11 contains a software development kit (i.e. SDK), at least directed to DRM applications and including DRM porting capacities (DRM porting kit). The secure part 11 is further provided with a first sub-part 12 called a baseline secure area and a second sub-part 13 called a complementary secure area.

The baseline secure area 12 is notably dedicated to usual DRM secure operations and storage that are not liable to customized modifications over time. It may be implemented in the client device 1 by a device manufacturer, for example an OEM (for Original Equipment Manufacturer). The baseline secure area 12 may notably contain the device-associated DRM private key K_{DRM} and a related device certificate CERT-D including the device-associated DRM public key K'_{DRM}. It may be configured for exploiting the DRM private key K_{DRM} with the usual deprotection UDP (generic notation for UDP-S, UDP-R, UDP-L and UDP-I) described above for simple licenses and license chains in unlocking the content keys Kc received from the license server 3 in the licenses LIC3-1.

The complementary secure area 13 is dedicated to secure customized DRM operations potentially subject to flexible remote modifications over time, and is configured for exploiting and possibly storing client-directed security elements, complementary to the information processed by the baseline secure area 12, and intended to be exploited in combination with the usual deprotection in DRM operations.

In addition, the baseline secure area 12 may include security elements corresponding to the client-directed security elements, called server-directed security elements, adapted to be transmitted off the device 1 and exploited in cryptographic operations executed in one or more license servers such as the server 3, e.g. via the license request REQ1-3L. They may be jointly exploited with the DRM public key K'_{DRM} and the usual protection in that or those server(s), e.g. in encryption operations protecting the content key Kc.

The server-directed security elements intended for the server 3 may notably include one or more customized protection functions PF, server provisioning data S-DATA and/or symmetric key(s) or shared secret(s) K_{SoC}. The corresponding client-directed security elements processed and stored in the complementary secure area 13 may notably include device provisioning data D-DATA, customized global code and configuration, customized functions DPF and/or the symmetric key(s) or shared secret(s) K_{SoC}. The functions DPF, called deprotection functions, are adapted to proceed with reverse operations so as to remove protections put in place by using the protection functions PF.

The symmetric keys / shared secrets K_{SoC} are for example of a 128-bit AES type. In variants, one or more key pairs K_{SoC}, K'_{SoC} are relied on instead of the symmetric key K_{SoC}. In the following, the keys K_{SoC} will often be referred to as "customization keys".

As will be developed below, the client-directed and server-directed security elements may be obtained by the device 1 via a provisioning server, while possibly originating from one or more SoC provider(s). They may be directly received by the device 1 in communicated data so as to be extracted, or may be indirectly derived from such received data. For example, the customization key K_{SoC} (symmetric key or key pair) may be computed from another received key by key derivation, or may result from a key exchange with the provisioning server. Likewise, the server provisioning data S-DATA and device provisioning data D-DATA may e.g. be based on the combination of received data with locally available data, and the customized functions PF and DPF may e.g. be computed from received parameters applied to parameterized functions present in the secure part 11.

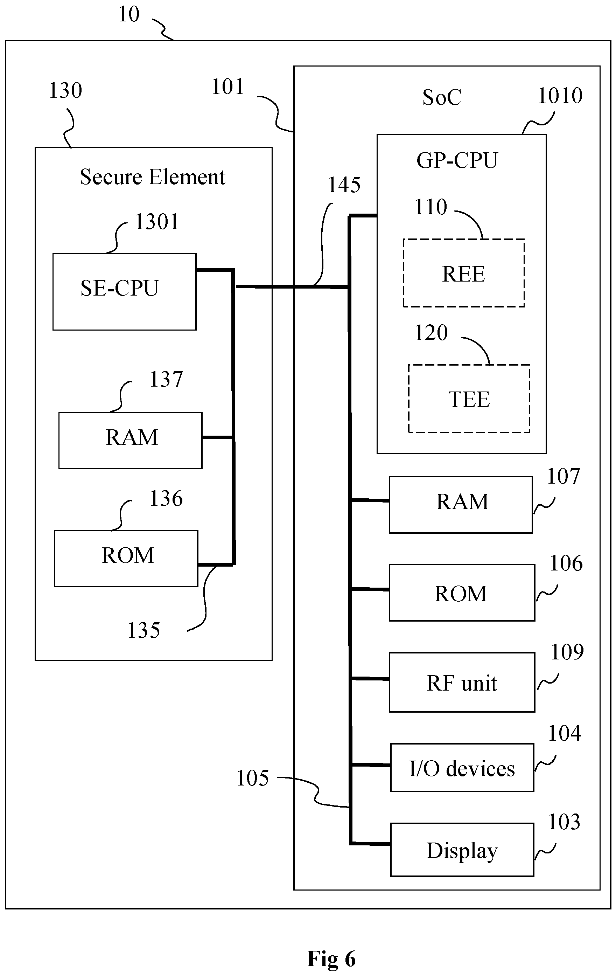

In a more detailed purely illustrative example embodiment 10 of the client device 1, represented on **Figure 6****,** the device 10 includes a SoC 101 in which a rich execution environment (i.e. REE) 110 and a TEE 120 containing the baseline secure area 12 are incorporated. A general-purpose CPU (for Central Processing Unit) 1010 embedded in the SoC 101 is in charge of operating the REE 110 and the TEE 120. The SoC 101 is also provided with a display device 103, one or more user interface (I/O for Input/Output) devices 104, a non-volatile memory of ROM type 106, a RAM 107, and one or more transmission-reception telecommunication components 109 (e.g. by radiofrequency, cable and/or optical fiber communications). Those elements are connected to each other by one or more buses 105 of addresses and data that also transports a clock signal.

Though not developed on the figure for sake of simplicity and as known to a skilled person, the REE 110 and TEE 120 may share resources such as notably the ROM 106 and RAM 107, a security mechanism enabling isolation between respectively dedicated areas. In other configurations, the TEE 120 is instead allotted dedicated read-only and/or random-access memory capacities, which further supports secure separation between the two areas.

The device 10 also includes an SE chip 130 forming the complementary secure area 13, provided with a secure CPU 1301, a non-volatile memory 136 and a RAM 137. Those elements are connected to each other by a bus 135 of addresses and data that also transports a clock signal, extended towards the buses 105 of the SoC 101 via an interfacing secure connection bus 145 (e.g. in the form of a protected cryptographic channel).

In variant implementations, another SE is used instead of the TEE 120.

The baseline secure area 12 and the complementary secure area 13 are differentiated based on their processing functions. As previously mentioned, they may also include dedicated respective storage capacities. Anyway, in alternative implementations of the device 1, storage locations outside the secure area 12 and/or the secure area 13, adapted to cooperate with those areas in DRM operations, are provided for. Wherever appropriate, notably when involving the handling of a private key or a shared secret, those storage locations and their communications with the secure areas 12 and 13 are securely protected, as known to a skilled person. The storage locations may be arranged either inside the device 1, in particular inside the secure part 11, or in external storage media and/or peripherals.

Securely separating legacy DRM functions from introduced customized DRM functions in the device 1 makes possible enhanced robustness with respect to e.g. crackers, notably when an SE is exploited for customization. It further enables modular adjustments of existing apparatus, by facilitating their adaptation whether in factory or in field.

While the above implementations of the device 1 may be particularly desirable in terms of security and efficiency, in variants, one or more same processors are configured for carrying out the security operations pertaining to the usual DRM as well as the customized operations. Such implementations may facilitate the use of existing hardware through proper software adaptations. They may also be interesting notably when usual and customized DRM operations are combined in such a way that they cannot be readily separated in the device 1.

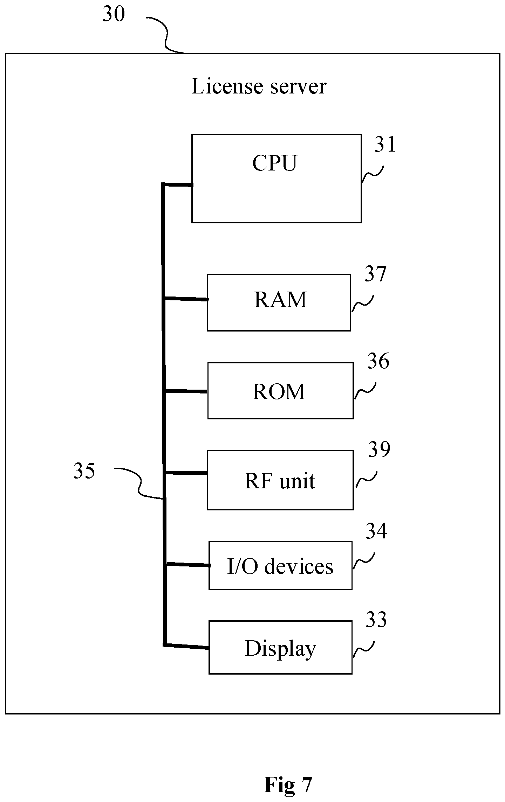

In an example embodiment of the license server 3, noted 30 and represented on **Figure 7****,** at least one operational part of the server 30 comprises the following elements, connected to each other by a bus 35 of addresses and data that also transports a clock signal: a CPU 31, one or more I/O devices 34, a non-volatile memory 36, a RAM 37, and one or more transmission-reception telecommunication components 39.

The DRM client device 1 is configured for creating the license request REQ1-3L, e.g. by the DRM porting kit of the secure part 11, and for transmitting it to the license server 3 at content consumption time, so as to retrieve the content key Kc and the content usage rules in the license LIC3-1 (**Figure 1**). Part of that transmission may be protected by a public key K'L of the license server 3, previously obtained by e.g. a key exchange procedure such as a Diffie-Hellman (DH) key exchange or an Elliptic-Curve DH (ECDH) key exchange.

The license request REQ1-3L may contain the device public key K'_{DRM} as well as the server-directed security elements. It may more precisely contain a challenge message including a device certificate chain finishing with the device certificate CERT-D, the latter containing the device-associated DRM public key K'_{DRM}

In some embodiments, which will be detailed below, the generated challenge message further contains the server-directed security elements to be exploited by the license server 3 together with the key K'_{DRM} in protecting the access information to be provided to the device 1, e.g. the content key K_{c}. The server-directed security elements are then protected by the license server public key K'L.

In particular related implementations, the key K'_{DRM} and the server-directed security elements (customized protection functions PF, server provisioning data S-DATA, shared secret K_{SoC}) are all included in the device certificate CERT-D, which may be stored in the baseline secure area 12. The device 1 is then configured for implicitly retrieving that whole set of server-directed security elements by merely including the device certificate CERT-D in the challenge message.

In variant implementations, the server-directed security elements are stored in the complementary secure area 13, and the device 1 is configured for extracting those pieces of information in generating the challenge message.

The license server 3 is configured for receiving and validating the license request REQ1-3L, and if a user of the device 1 has the right to consume the content C2-1, for extracting the challenge message. In this respect and if appropriate, the license server 3 may decrypt the challenge message with its private key KL.

The license server 3 may further persist the function of customized protection of the content key Kc by a group-related key Kg, potentially needed in case of later usage of leaf licenses.

In what follows, the modules are to be understood as functional entities rather than material, physically distinct, components. They can consequently be embodied either as grouped together in a same tangible and concrete component, or distributed into several such components. Also, each of those modules is possibly itself shared between at least two physical components. In addition, the modules are implemented in hardware, software, firmware, or any mixed form thereof as well. They are preferably embodied within at least one processor of the devices.

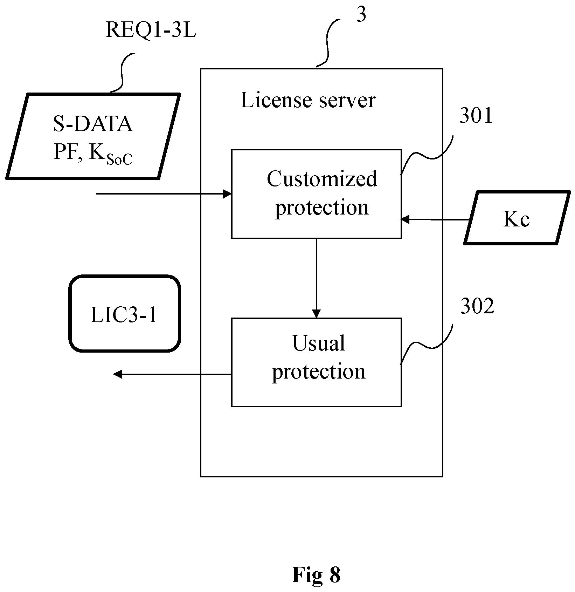

Some important functionalities of the license server 3, as schematically apparent on **Figure 8** in a particular implementation, include a module 301 dedicated to customized protection of the access information such as e.g. the content key Kc, and a module 302 dedicated to usual protection of the access information in combination with the customized protection by the module 301. For example, the module 302 is configured for processing the access information protected in a customized way, constituting the output of the module 301.

More in detail in the particular implementation, the module 301 is configured for receiving the access information (e.g. Kc) and the license request REQ1-3L, thereby the customized protection functions PF, server provisioning data S-DATA and/or customization key K_{SoC} contained therein, and for applying a customized protection to the access information. The module 302 is then configured for receiving that customized protection together with the public key K'_{DRM} and for applying a usual protection UP so as to produce the license LIC3-1 involving the joint personalized and usual protections of the access information.

The reader will appreciate that being in a position to introduce, update, correct and/or adjust the protection functions PF, server provisioning data S-DATA and/or custom ization key K_{SoC} in the license server 3 consistently with the security mechanisms in the device 1, notably the deprotection functions DPF, may potentially offer substantial DRM flexibility. In particular, DRM client-server protection renewability may give considerable advantages, and enable notably secure customization, dynamic DRM evolutions and/or prevention of achievement or continuation of concealed prejudicial operations by crackers. DRM client-server protection flexibility may further allow targeted customized adaptations to specific items or sets of contents, devices and/or users.

Such capacities may notably enable regular, possibly periodic, updating of the custom function logics. They may allow modifications of the updating periodicity adjustment over time in function of levels of estimated risks, as well as prompt updating actions in case of identified flaw or system infiltration event.

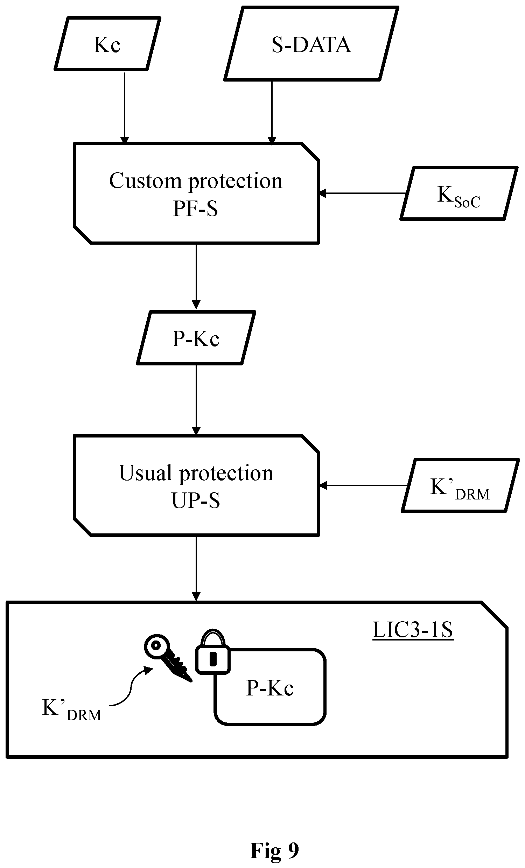

In configurations involving a simple license LIC3-1S while completing the presentation given with reference to **Figure 2****,** the license request REQ1-3L may include a customized protection function PF-S further to the server provisioning data S-DATA and the customization key K_{SoC}. As illustrated with an example on **Figure 9****,** the license server 3 is then configured for applying the protection function PF-S to the key Kc, provisioning data S-DATA (or part of them) and key K_{SoC} so as to produce a protected content key P-Kc (module 301), and for applying the usual protection UP-S (classical DRM license mechanism) to the protected content key P-Kc based on the public key K'_{DRM} so as to generate the license LIC3-1S (module 32) to be returned to the device 1.

The device 1 is then configured for validating the received license LIC3-1S and for checking its rules, and if everything is fine, for extracting the protected key P-Kc from the license LIC3-1S by means of the device private key K_{DRM} and of the usual deprotection UDP-S corresponding to the usual protection UP-S (baseline secure area 12). The device 1 is also configured for providing that protected key P-Kc to a deprotection function DPF-S corresponding to the protection function PF-S so as to obtain in association with the customization key K_{SoC} the content key Kc itself (complementary secure area 13). The device 1 may then locally re-protect the content key Kc and securely set it in a descrambler for decrypting the contents C2-1.

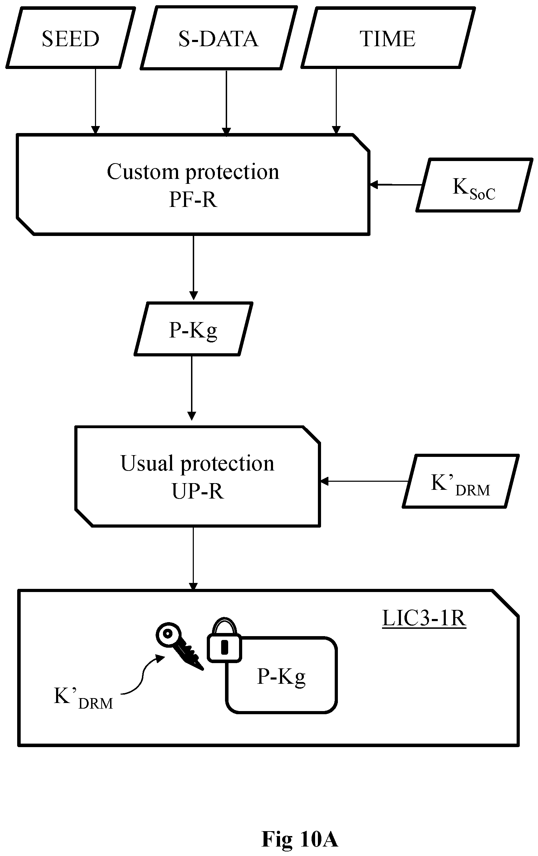

In configurations involving root licenses LIC3-1R while completing the presentation given with reference to **Figures 4A** **and** **4C****,** the license request REQ1-3L may include one or more customized protection functions PF-R adapted to the generation of the root licenses LIC3-1R further to the server provisioning data S-DATA and the customization key K_{SoC}. As illustrated with an example on **Figure 10A****,** the license server 3 may be configured for applying the protection function PF-R to a group-related seed SEED maintained by the license server 3, the provisioning data S-DATA (or part of them), the key K_{SoC} (thereby having the function of a root key) and the current time so as to produce a protected group-related key P-Kg (module 301), and for applying the usual protection UP-R to the protected key P-Kg based on the public key K'_{DRM} so as to generate the license LIC3-1R (module 302) to be returned to the device 1.

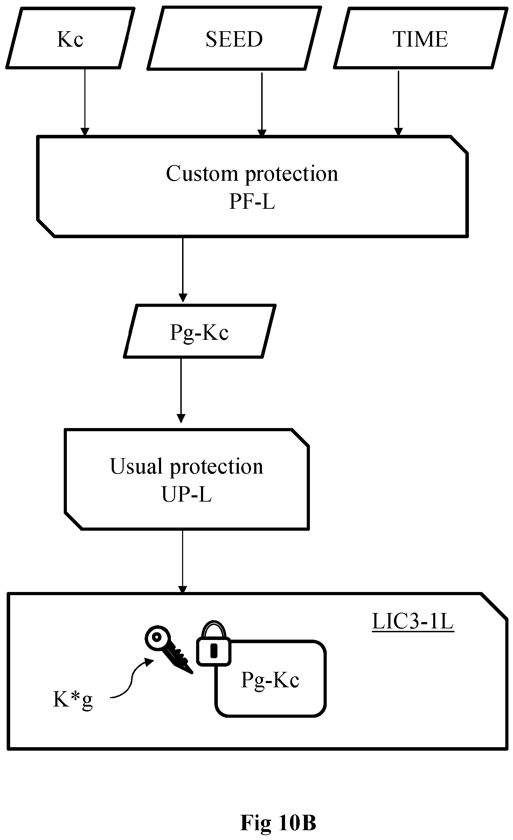

Also, as illustrated with a related example on **Figure 10B** involving leaf licenses LIC3-1L while completing the presentation given with reference to **Figures 4A** **and** **4B****,** the server 3 may be configured for applying the protection function PF-L to the content key Kc, a group-related seed SEED maintained by the license server 3 and the current time so as to produce a globally protected content key Pg-Kc (module 301) relying on a protection by a group-related key Kg associated with the seed SEED. Applying the usual protection UP-L to the protected content key Pg-Kc generates the leaf license LIC3-1L to be returned to the device 1. In variant modes, a further input to the protection function PF-L comes from the provisioning data S-DATA (or part of them).

The license server 3 may maintain a list of protection functions applying a protection by group-related keys Kg to the content key Kc, each of those protection functions being associated with device models and/or SoC models authorized to receive the related leaf licenses LIC3-1L. Accordingly, each time a new leaf license is created, the license server 3 may use this list of functions to protect the content key Kc with the appropriate group-related key Kg for all the targeted device models.

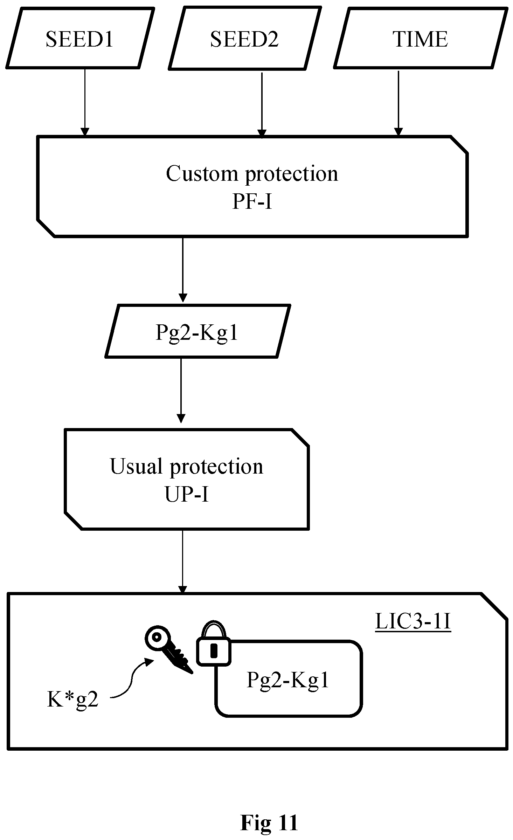

In example configurations involving the protection of a group-related key by another group-related key in intermediary licenses LIC3-11 while completing the presentation given with reference to **Figure 4C****,** as illustrated on **Figure 11****,** the license server 3 is configured for applying a received customized protection function PF-I to a first group-related seed SEED1, a second group-related seed SEED2 and the current time so as to produce a protected group-related key Pg2-Kg1 amounting to the global protection of a first group-related key Kg1 by a second group-related key Kg2 corresponding respectively to SEED1 and SEED2 (module 301). In some implementations, a further input to the protection function PF-I comes from the provisioning data S-DATA (or part of them). The license server 3 is further configured for applying the usual intermediary protection UP-I to the protected group-related key Pg2-Kg1 so as to generate the intermediary license LIC3-11 (module 302) to be returned to the device 1.

In alternative embodiments, instead of the seeds SEED, SEED1, SEED2, other parameters representative of the group-related keys Kg are used. Those parameters may even consist in the group-related keys Kg themselves once generated.

In some variants, customized protection functions as received in the license request REQ1-3L are employed for part only of the protection functions and not for others. For example, the license server 3 exploits default usual KDFs for protecting the content key Kc with group-related keys Kg, while relying on received customized protection functions PF-R or PF-I in protecting those group-related keys Kg. In other examples, the license server 3 exploits default usual KDFs for protecting the group-related keys Kg in root and intermediary licenses, while relying on received customized protection functions PF-L in protecting the content key Kc. In still other examples, the license server 3 exploits default usual KDFs for protecting part of the group-related keys Kg, while relying on received customized protection functions PF-R or PF-I in protecting the other group-related keys Kg.

In all those license chain configurations, the device 1 is configured for validating the received licenses LIC3-1R, LIC3-1L and possibly LIC3-11, checking their rules, and if everything is fine, extracting from those licenses the protected keys P-Kg, Pg-Kc and for a three-level license chain or more, Pg2-Kg1. More precisely, the device 1 is configured for extracting the protected keys P-Kg in the root license LIC3-1R by applying to the uniquely over-protected keys P-Kg the usual root deprotection UDP-R with the customization key K_{SoC} and the DRM private key K_{DRM} (baseline secure area 12), and for providing those extracted protected keys P-Kg to the proper deprotection root function DPF-R corresponding to reversing the protection function PF-R in combination with the customization key K_{SoC} so as to obtain the group-related keys, or highest-level group-related keys, Kg (complementary secure area 13). The device 1 is then configured for extracting the content keys Kc in the leaf licenses LIC3-1L, and wherever appropriate the intermediary group-related keys Kg in the intermediary licenses LIC3-1I through downstream chained operations, by exploiting the usual leaf deprotection UDP-L and intermediary deprotection UDP-I with the previously extracted group-related keys Kg (baseline secure area 12), in combination with the respectively corresponding customized deprotection functions DPF-L and DPF-I (complementary secure area 13). The device 1 may then locally re-protect the content keys Kc and securely set them in a descrambler for decrypting the contents C2-1.

In license chain implementations such as developed above in relation with the leaf licenses and intermediary licenses **(****Figures 10B** **and** **11****),** the custom leaf or intermediary protection based on PF-L or PF-I is applied first and the resulting protected keys are subject to the usual protection UP-L or UP-I in the license server 3, and conversely in the device 1. In this respect, the usual and custom functions may be separated, and in particular be respectively implemented in the baseline area 12 and in the complementary area 13 of the device 1. Potential advantages include strengthened security by the exploitation of dedicated protected processing parts, and streamlined integration of customization functions in existing apparatus.

In variants, the custom leaf or intermediary protection PF-L or PF-I is otherwise combined with the usual leaf or intermediary protection UP-L or UP-I. For example, the usual protection is applied before the customized protection function instead of being applied afterwards, a combined application intermingling the usual and customized protections via arithmetic operations is executed, or a transformed protection is derived from the usual protection on the ground of the customized protection. In the device 1, while an order reversal of the usual and customized operations may still allow a partitioning of the usual deprotection in the baseline area 12 on one hand and of the customized deprotection in the complementary area 13 on the other hand, such a distribution of functions is then generally not applicable to the leaf or intermediary deprotection. The combined deprotection may then be executed entirely in the complementary area 13, or in the non-differentiated secure area of the device 1 when no separate areas are implemented for usual and customized deprotections.

It deserves noting that in those variants pertaining to leaf and intermediary licenses, the protection scheme for root licenses in the license server 3 remains the exploitation of the server-directed security elements followed by the application of the usual protection UP-R, and the deprotection scheme for root licenses in the device 1 remains consistently the application of the usual deprotection UDP-R followed by the exploitation of the client-directed security elements.

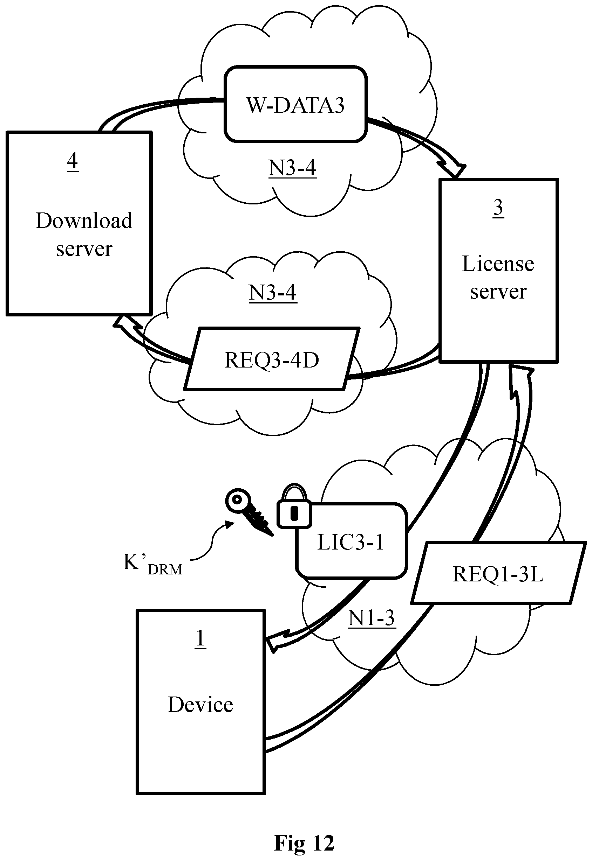

In alternative implementations, as illustrated on **Figure 12****,** instead of transmitting the customized protection functions PF, server provisioning data S-DATA and customization key K_{SoC} to the license server 3, the device 1 is adapted to provide links S-LINKS pointing to those server-directed security elements, such as e.g. Web/URL addresses (standing for Uniform Resource Locator), and possibly related hash, within the request REQ1-3L. The license server 3 is thus in a position to send a request REQ3-4D to one or more download server 4 via a communication network N3-4, so as to download working data W-DATA3 including the customization server-directed security elements (which may be encrypted with the public key K'L of the license server 3, and be possibly subject to safety hash checking by the recipient license server 3).

Such implementations may enable a decrease in the volume of transmitted information, thus in the network passband, at the expense of potential additional security constraints.

### Provisioning of the client device

In what follows, particular implementations are described concerning the provisioning of the device 1 with the required security elements to be exploited by the device 1 and the license server 3.

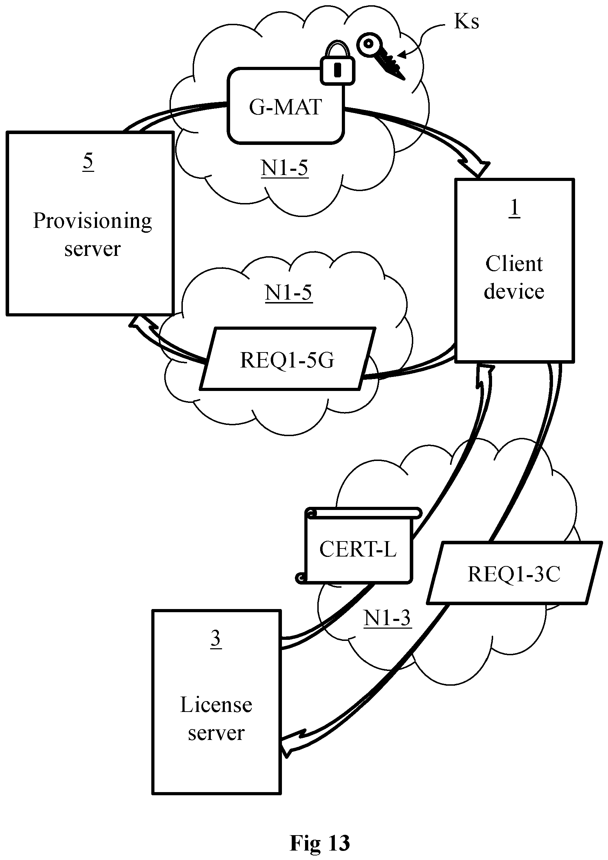

In such implementations, as illustrated on **Figure 13****,** the device 1 is fed by one or more provisioning server 5 via a communication network N1-5. In this prospect, the device 1 is configured for first connecting to the target license server 3 by transmitting a request REQ1-3C so as to obtain the certificate CERT-L of that license server 3.

The device 1 is then adapted to securely connect to the provisioning server 5 and to communicate a request REQ1-5G containing notably the certificate CERT-L, so as to obtain global provisioning material G-MAT including, or enabling extraction or derivation of, the client-directed and server-directed security elements. In response to this request REQ1-5G, the provisioning server 5 is configured for securely communicating the provisioning material G-MAT to the device 1 by using a previously agreed symmetric session key Ks if all conditions are met, as will be developed below.

The global provisioning material G-MAT may notably include the following customized security elements: the protection functions PF, the server provisioning data S-DATA, the customization key K_{SoC}, the device provisioning data D-DATA, the customized client-directed global code and configuration. The received device global code and global configuration can potentially alter functionalities of the device 1 by changing the implementation of system hooks in that device 1.

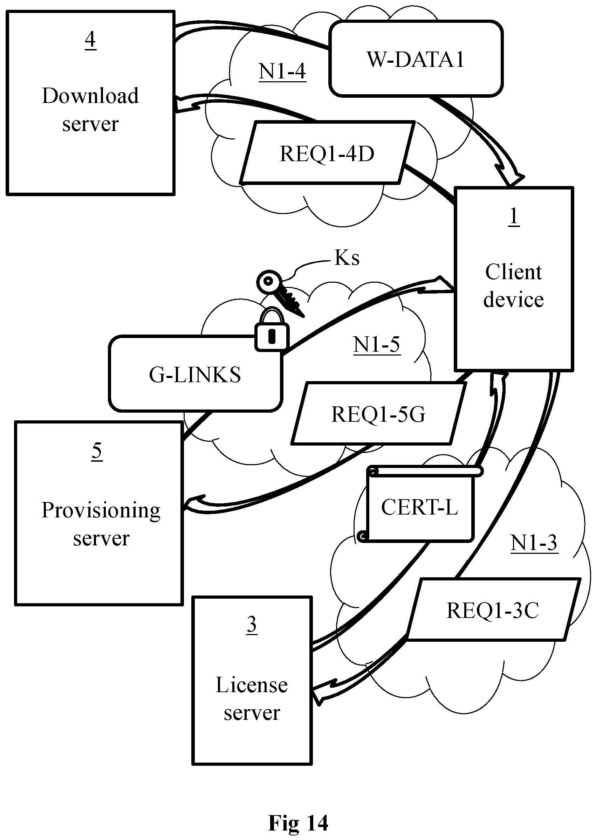

In alternative implementations, as shown on **Figure 14****,** instead of transmitting to the device 1 the uniquely encrypted global code and data, the provisioning server 5 is configured for providing the device 1 with signalization such as related links G-LINKS that may include e.g. Web/URL addresses, and possibly with related hash. Those links G-LINKS include links D-LINKS to the client-directed customization security elements, and the links S-LINKS to the server-directed customization security elements (which may be same links when the client-directed and server-directed security elements are grouped). The device 1 is thus in a position to send a request REQ1-4D to one or more download server 4 via a communication network N1-4, so as to download working data W-DATA1 including the customization client-directed security elements - through secure encrypted exchanges, possibly completed by safety hash checking within the recipient device 1.

The device 1 is then adapted to communicate to the license server 3 within its request REQ1-3L the server-directed links S-LINKS, instead of the server-directed security elements themselves, so that the license server 3 can rely on those links S-LINKS for retrieving the server-directed security elements from the download server 4 within the working data W-DATA1, as presented above in relation with **Figure 12****.** The download servers 4 addressed by the device 1 and the license server 3 may be the same or different ones, in which latter case the client-directed security elements and server-directed security elements may be stored at different locations.

Such implementations may enable a substantial decrease in the volume of transmitted information, thus the network passband, at the expense of potential additional security constraints.

In variant embodiments involving a download server, not combined with the above implementation relying on downloading from the server 4 to the license server 3, the device 1 is adapted to download from the download server 4 the server-directed security elements in addition to the client-directed ones through the links G-LINKS, and to communicate those retrieved server-directed security elements to the server 3 within the request REQ1-3C.

Though being more demanding in network bandwidth resources than the mere transmission of links to the server 3, such embodiments may allow a decrease of hacking risks through reducing network transport of sensible information.

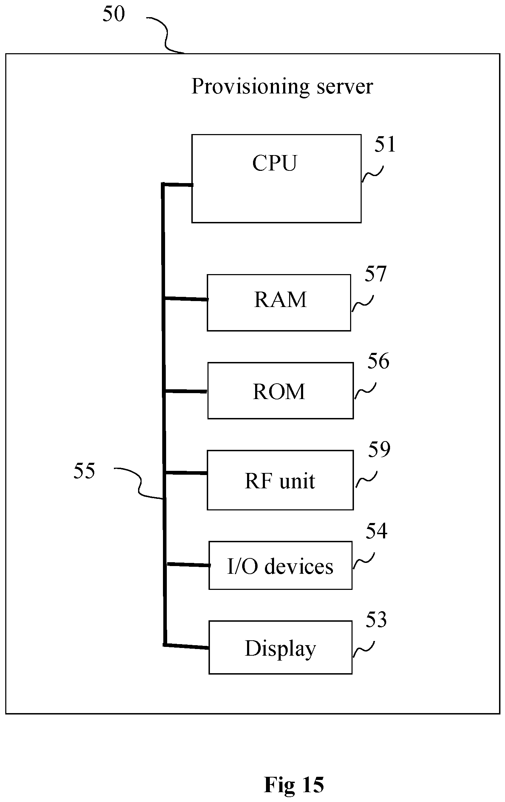

In an example embodiment of the provisioning server 5, noted 50 and represented on **Figure 15****,** at least one operational part of the server 50 includes the following elements, connected to each other by a bus 55 of addresses and data that also transports a clock signal: a CPU 51, one or more I/O devices 54, a non-volatile memory 56, a RAM 57, and one or more transmission-reception telecommunication components 59.

More will be said below on the security mechanisms enabling the device 1 to obtain the provisioning material G-MAT from the provisioning server 5.

### Data pre-loading in servers

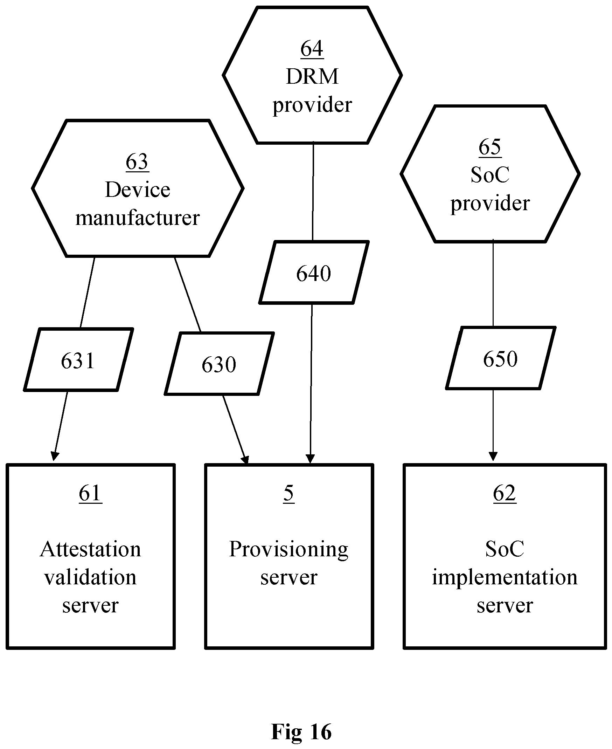

In example pre-loading operations, as visible on **Figure 16****,** the provisioning server 5 is adapted to receive from a DRM provider 64 information 640 including a CA certificate (for Certificate Authority) and certificate revocation lists (CRLs) regarding target device models as well as service providers. Instead of CRLs, the provisioning server 5 may be provided with relevant OCSP messages (for Online Certificate Status Protocol) by an OCSP responder. The provisioning server 5 is also adapted to receive from a device manufacturer 63 information 630 including about the target device model: private keys and certificate chains going up to the DRM CA.

An attestation validation server 61 is further configured for receiving from the device manufacturer 63 information 631 including: a list of SoC models and Soc ID (identifiers) used by the target device model, as well as related versions or hash of software and configuration data - to be validated in a later remote attestation step.

In addition, a SoC implementation server 62 is adapted to receive from a SoC provider 65 or from a third party managing a root of trust for the SoC provider 65, information 650 including the following data related to relevant SoC models:
- a list of SoC IDs of a SoC model potentially used by a device model to be supported,
- a list of attestation validation keys,
- a list of key exchange keys,
- a list of customized protection function root keys,
- the customized global configuration and global code, to be provisioned to each device,
- customized attestation validation function, key exchange response function and provisioning function, to be used by the provisioning server 5,
- the customized functions for protection of content key with SoC secret, protection of content key with group-related key, protection of group-related key with SoC secret, and protection of group-related key with group-related key (and the corresponding customized deprotection functions DPF).

In particular implementations, the received customized functions in the information 650 include more precisely (together with the customized functions for deprotection):
- the customized functions for protection of content key with service key, protection of service key with SoC secret, and protection of service key with service key, and/or
- the customized functions for protection of content key with domain key, protection of domain key with SoC secret, and protection of domain key with domain key.

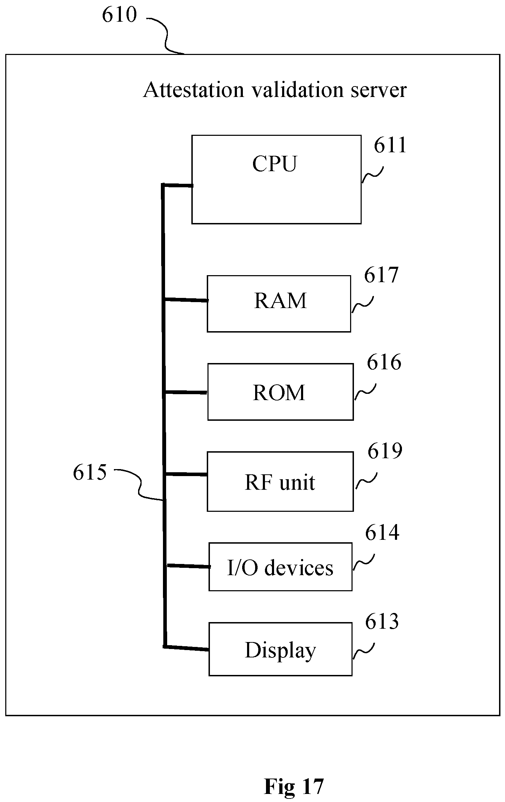

In an example embodiment of the attestation validation server 61, noted 610 and represented on **Figure 17****,** at least one operational part of the server 610 comprises the following elements, connected to each other by a bus 615 of addresses and data that also transports a clock signal: a CPU 611, one or more I/O devices 614, a non-volatile memory 616, a RAM 617, and one or more transmission-reception telecommunication components 619.

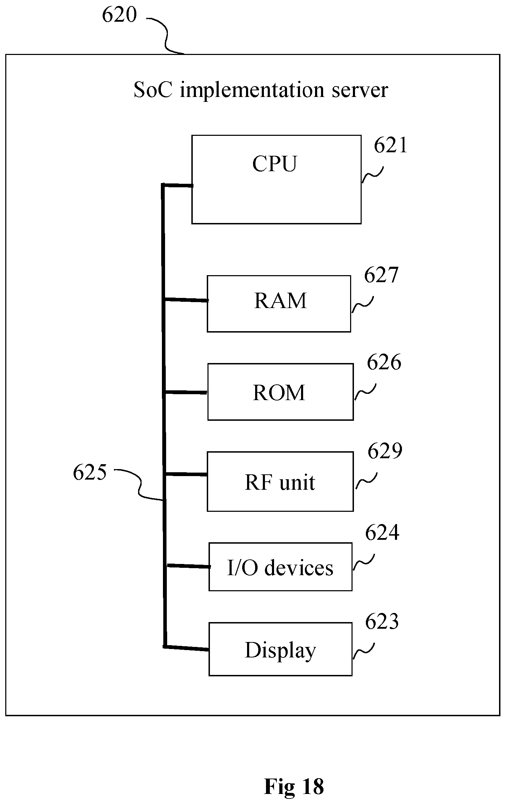

Also, in an example embodiment of the SoC implementation server 62, noted 620 and represented on **Figure 18****,** at least one operational part of the server 620 comprises the following elements, connected to each other by a bus 625 of addresses and data that also transports a clock signal: a CPU 621, one or more I/O devices 624, a non-volatile memory 626, a RAM 627, and one or more transmission-reception telecommunication components 629.

### Bootstrap operations

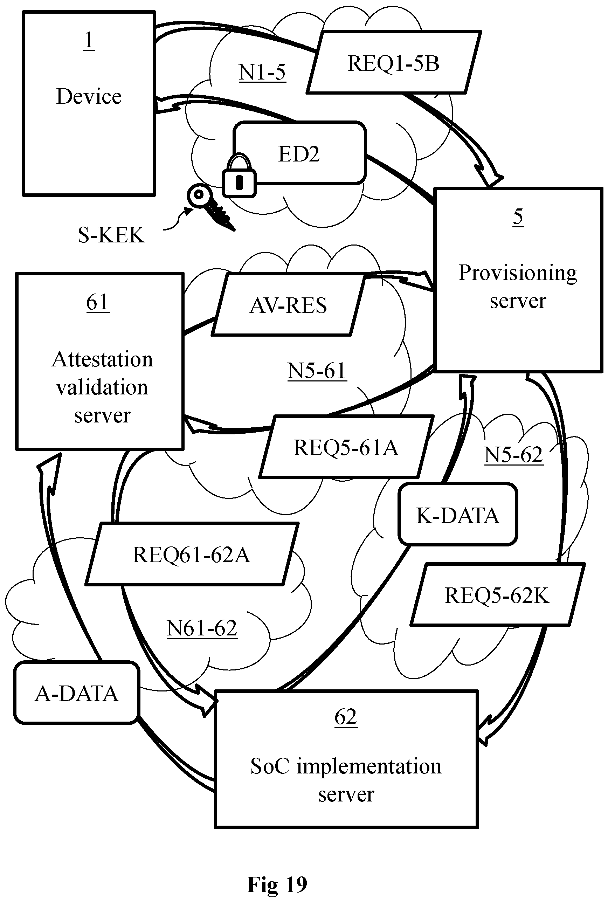

Upon proper conditions, the bootstrap procedure enables the device 1 to receive the session key Ks from the provisioning server 5 for securing their exchanges via the network N1-5. This is subject to upstream strong authentication of the device 1 and secure key exchange. In this respect, as visible on **Figure 19****,** the device may initiate the operations by sending to the provisioning server 5 a bootstrap request REQ1-5B including a remote attestation message associated with an attestation validation key linked to the device, and a secure key exchange request associated with a key exchange key linked to the device and encrypted as ED1. A same key K_{DEV} linked to the device may be exploited for both attestation validation key and key exchange key, and a symmetric key or a key pair may be used for any or both of those operations, as known to a skilled person.

The provisioning server 5 is then adapted to forward the attestation part of the bootstrap request REQ1-5B to the attestation validation server 61 in a request REQ5-61A via a network N5-61, and the attestation validation server 61 is adapted to call the SoC implementation server 62 through a request REQ61-62A via a network N61-62 for retrieving the attestation validation key (or a public key corresponding to the above attestation validation key being private in case of a key pair) and customized attestation server code related to the concerned SoC ID and SoC model. Once the attestation validation server 61 receives corresponding information A-DATA from the SoC implementation server 62, it may run the customized attestation validation function by using the received attestation message and the attestation validation key (or a public key exchange key corresponding to the above key exchange key being private in case of a key pair). Based on the result status, the attestation validation server 61 compares the attested data against the data pre-loaded by the device manufacturer 63 - configuration and software hashes and/or versions - and returns to the provisioning server 5 a message AV-RES containing a resulting status and all the data found in the validated attestation.

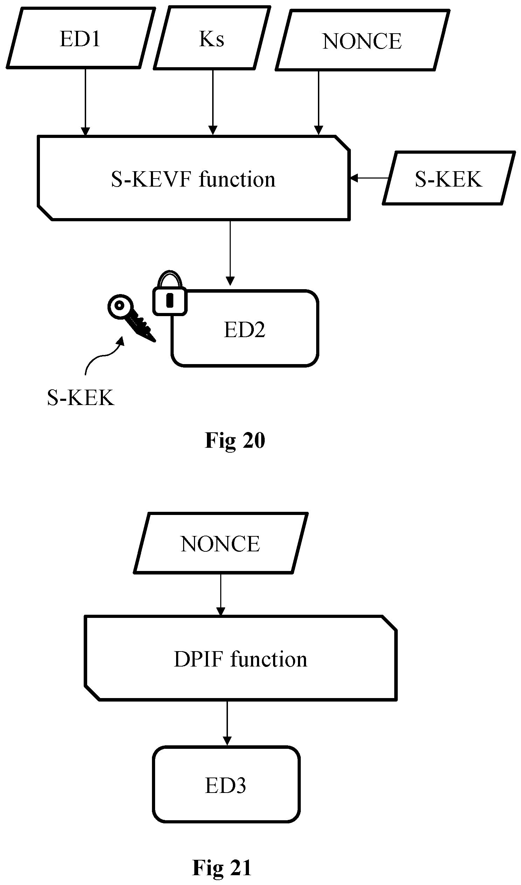

The provisioning server 5 is adapted to check the attestation status, and if validated, to call the SoC implementation server 62 through a request REQ5-62K via a communication network N5-62 so as to retrieve a message K-DATA containing the pre-loaded secure key exchange key S-KEK and secure key exchange validation function S-KEVF. As visible on **Figure 20****,** the provisioning server 5 is configured for running the function S-KEVF by providing the encrypted data ED1, a random session key Ks and a nonce, thereby obtaining encrypted data ED2 to be communicated to the device 1 as a response to the request REQ1-5B.

### Device remote provisioning

The operations enabling the device 1 to be provisioned with the client-directed and server-directed security elements, briefly presented above, are presently developed and completed. Once the device 1 has requested and obtained the certificate CERT-L of the relevant license server 3 (which applies to each license server the device 1 must interact with), the device 1 is adapted to connect to the provisioning server 5 and to trigger exchanges protected by means of the session key Ks negotiated during the previous bootstrap process. The device 1 may generate the device-associated DRM key pair K_{DRM}, K'_{DRM}, produce encrypted data ED3 from applying a device provisioning initialization function DPIF to the nonce, as shown on **Figure 21****,** and create a certificate signing request, i.e. a CSR, including the DRM public key K'_{DRM} to be certified and ED3.

In particular implementations, the request REQ1-5G transmitted by the device 1 to the provisioning server 5 contains that CSR together with the license server certificate CERT-L, as detailed hereinafter.

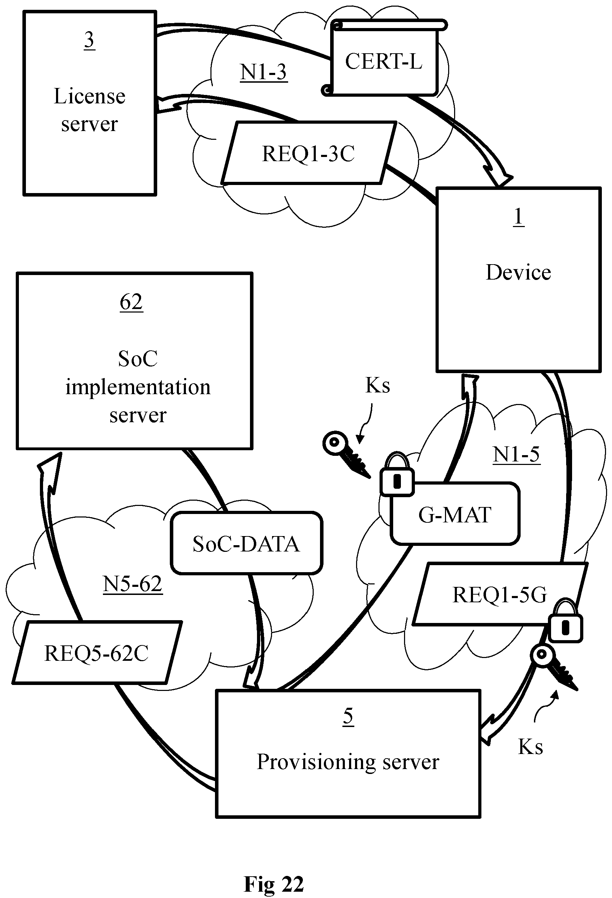

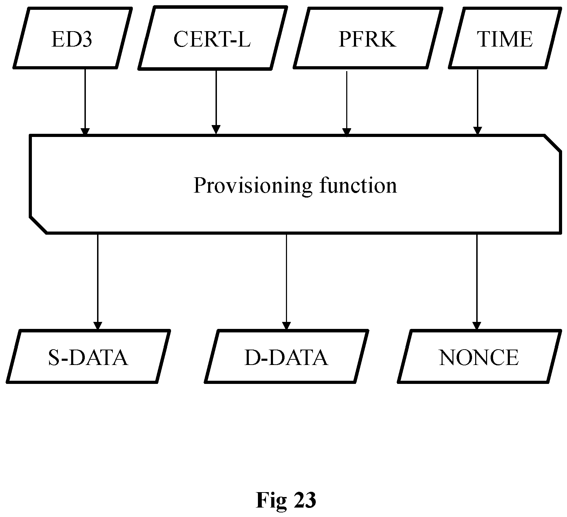

As represented on **Figure 22****,** upon receiving the request REQ1-5G, the provisioning server 5 is configured for contacting the SoC implementation server 62 through a request REQ5-62C so as to obtain information SoC-DATA containing the customized protection function root keys including the customization key K_{SoC}, customized provisioning function, customized global configuration and global code, and customized protection/deprotection functions (PF, DPF). The provisioning server 5 may then run the customized provisioning function, as shown on **Figure 23****,** by providing as inputs the customized protection function root keys (noted PFRK), the current time, the license server certificate CERT-L and ED3 coming from the CSR, and receive the server-provisioning data S-DATA, the device-provisioning data D-DATA and the nonce. The provisioning server 5 may check that the obtained nonce is the same as the one provided in the bootstrap stage, in which case it transmits the provisioning material G-MAT to the device 1, and may return an error message otherwise.

The provisioning server 5 is configured for transmitting the provisioning material G-MAT in two parts: the server-directed security elements included in the device certificate CERT-D, itself protected by the license server public key K'L on one hand; and the client-directed security elements outside the device certificate CERT-D on the other hand (the whole being protected by the session key Ks). The customization key Ksoc is then present in both parts.

The device 1 is configured for persisting locally in a secure way the received device certificate CERT-D and the client-directed security elements (deprotection functions DPF, device-provisioning data D-DATA, customization key Ksoc, device global code and configuration).

### DRM process

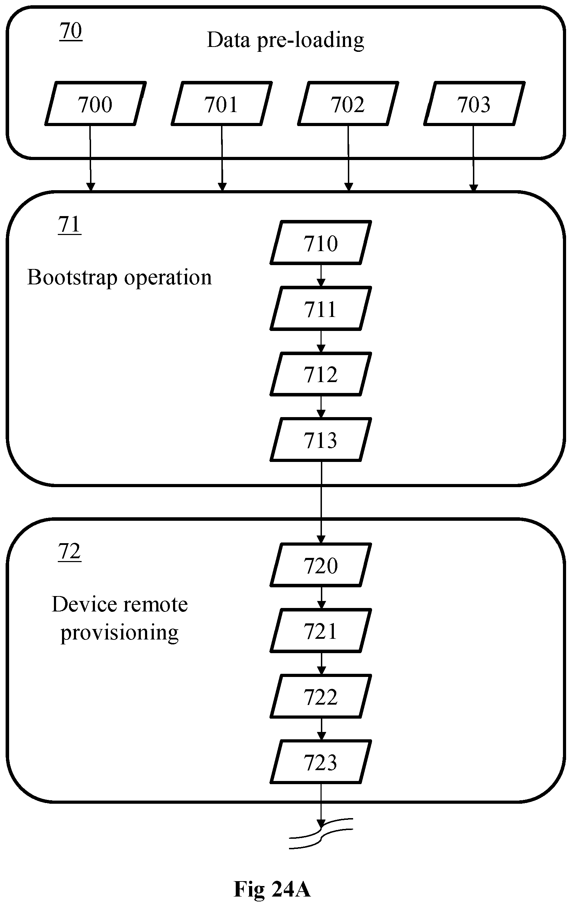

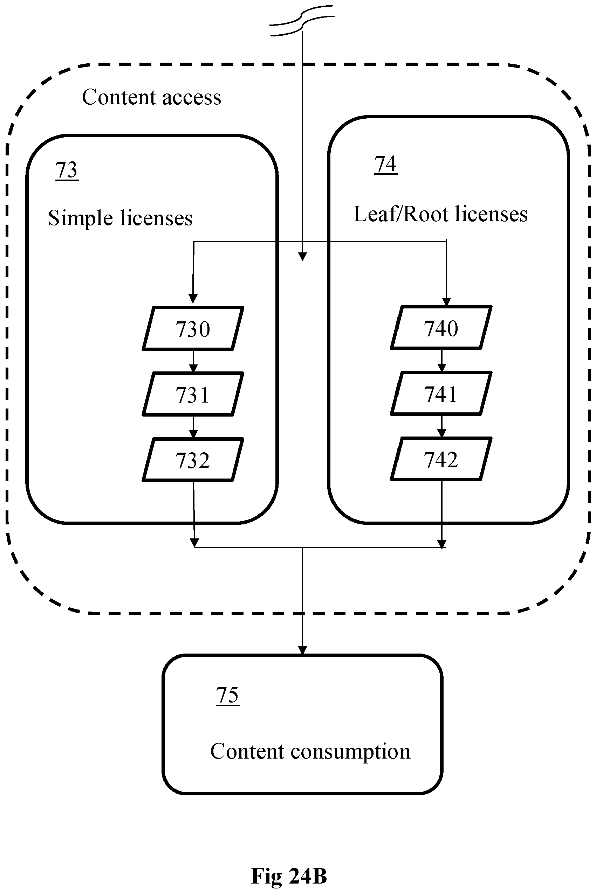

In operation, the system including the various entities disclosed above may for example execute the following process 7, in relation with **Figures 24A** **and** **24B****:**
- in a data pre-loading stage 70, load the CA certificate and CRLs in the provisioning server 5 (step 700), load the device model private key and certificate chains in the provisioning server 5 (step 701), load the information 631 from the device manufacturer 63 in the attestation validation server 61 (step 702), and load the information 650 from the SoC provider 65 or from the involved third party in the SoC implementation server 62 (step 703);
- in a bootstrap operation stage 71, send by the device 1 the bootstrap request REQ1-5B including ED1 to the provisioning server 5 (step 710), forward the attestation part of that bootstrap request REQ1-5B by the provisioning server 5 to the attestation validation server 61 (step 711), check by the attestation validation server 61 the attested data based on attestation elements obtained from the SoC implementation server 62 and data pre-loaded from the device manufacturer 63, and return a status to the provisioning server 5 (step 712), run by the provisioning server 5 the key exchange validation function S-KEVF requested from the SoC implementation server 62 if the status is fine, by inputting ED1, Ks and the nonce and obtaining ED2, and by providing ED2 to the device 1 (step 713);
- in a device remote provisioning stage 72, retrieve by the device 1 from the license server 3 the certificate CERT-L (step 720), generate by the device 1 the CSR including ED3 and transmit to the provisioning server 3 the request REQ1-5G containing the CSR and CERT-L under the protection of Ks (step 721), run by the provisioning server 5 the customized provisioning function requested from the SoC implementation server 62 by inputting CERT-L, ED3, the customized protection function root keys and the current time and by obtaining S-DATA, D-DATA and the nonce, and check the correctness of the nonce (step 722), persist locally in the device 1 the device certificate CERT-D including the server-directed security elements, the device provisioning data D-DATA and the device global code and configuration received from the provisioning server 5 (step 723);
- execute either a content access stage 73 with simple licenses or a content access stage 74 with leaf/root licenses, in which in stage 73, transmit by the device 1 to the license server 3 a license request REQ1-3L containing the custom protection functions PF-S, server-provisioning data S-DATA and customization key K_{SoC} (step 730), protect by the server 3 the content key Kc through running the custom protection functions PF-S with the customization key Ksoc together with the usual protection UP-S, and return the thereby protected license LIC3-1S to the device 1 (step 731), extract by the device 1 the content key Kc from the license LIC3-1S through using the deprotection function DPF-S with the customization key K_{SoC} and device provisioning data D-DATA (step 732); and in which in stage 74 (license chain), transmit by the device 1 to the license server 3 a license request REQ1-3L containing the custom protection functions PF-R, PF-L and possibly PF-I, server-provisioning data S-DATA and customization key K_{SoC} (step 740), protect by the server 3 the group-related key Kg through running the custom protection functions PF-R with the customization key Ksoc together with the usual protection UP-R, and return the thereby protected root license LIC3-1R to the device 1, and/or protect by the server 3 the content key Kc through running the custom protection functions PF-L with group-related key Kg together with the usual protection UP-L, and return the thereby protected leaf license LIC3-1L to the device 1, and possibly protect by the server 3 (for a license chain with three levels or more) a first group-related key Kg1 through running the custom protection functions PF-I with a second group-related key Kg2 together with the usual protection UP-I, and return the thereby protected intermediary license LIC3-1I to the device 1 (step 741), extract by the device 1 the content key Kc from the leaf licenses LIC3-1L, possibly LIC3-1I, and root license LIC3-1R through using the deprotection functions DPF-R with the customization key Ksoc, DPF-I and DPF-L and the device provisioning data D-DATA (step 742);
- in a content consumption stage 75, consume by the device 1 the available contents C2-1 from the content provider 2 by decrypting them thanks to the content key Kc.

In particular modes of the content access stage 74, the following is carried out:
- transmit by the device 1 to the license server 3 the license request REQ1-3L containing the custom protection functions PF-Rsv, PF-Lsv and possibly PF-Isv, server-provisioning data S-DATA and customization key Ksoc (step 740), protect by the server 3 the service key Ksv through running the custom protection functions PF-Rsv with the customization key Ksoc together with the usual protection UP-R, and return the thereby protected root license LIC3-1Rsv to the device 1, and/or protect by the server 3 the content key Kc through running the custom protection functions PF-Lsv with service key Ksv together with the usual protection UP-Lsv, and return the thereby protected leaf license LIC3-1Lsv to the device 1, and possibly protect by the server 3 a first service key Ksv1 through running the custom protection functions PF-Isv with a second service key Ksv2 together with the usual protection UP-Isv, and return the thereby protected intermediary license LIC3-1Isv to the device 1 (step 741), extract by the device 1 the content keys Kc from the leaf licenses LIC3-1Lsv, possibly intermediary licenses LIC3-1Ilsv and root license LIC3-1Rsv through using the deprotection functions DPF-Rsv with the customization key Ksoc, DPF-Isv and DPF-Lsv and the device provisioning data D-DATA (step 742); and/or
- transmit by the device 1 to the license server 3 the license request REQ1-3L containing the custom protection functions PF-Rdm, PF-Ldm and possibly PF-Idm, server-provisioning data S-DATA and customization key Ksoc (step 740), protect by the server 3 the domain key Kdm through running the custom protection functions PF-Rdm with the customization key Ksoc together with the usual protection UP-R, and return the thereby protected root license LIC3-1Rdm to the device 1, and/or protect by the server 3 the content key Kc through running the custom protection functions PF-Ldm with domain key Kdm together with the usual protection UP-Ldm, and return the thereby protected leaf license LIC3-1Ldm to the device 1, and possibly protect by the server 3 a first domain key Kdm1 through running the custom protection functions PF-Idm with a second domain key Kdm2 together with the usual protection UP-Idm, and return the thereby protected intermediary license LIC3-1Idm to the device 1 (step 741), extract by the device 1 the content key Kc from the leaf licenses LIC3-1Ldm, possibly LIC3-1 Idm, and root license LIC3-1Rdm through using the deprotection functions DPF-Rdm with the customization key Ksoc, DPF-Idm and DPF-Ldm and the device provisioning data D-DATA (step 742).

The reader will find useful additional synthetic information in the following tables I and II. In Table I, updatable mechanisms at the client device side and dynamic mechanisms at the provisioning and license server sides are pointed out, while Table II, relevant inputs and outputs are listed for various function hooks.

**Table I - List of system hooks**

| **Name** | **Client side** | **Server side** |
|---|---|---|
| Attestation creation | Updatable | X |
| Attestation validation | X | Dynamic in provisioning server |
| Key exchange initialization | Updatable | X |
| Key exchange response | X | Dynamic in provisioning server |
| Key exchange finalization | Updatable | X |
| Provisioning initialization | Updatable | X |
| Provisioning response | X | Dynamic in provisioning server |
| Provisioning finalization | Updatable | X |
| Protection of content key for SoC | X | Dynamic in license server |
| Deprotection of content key by SoC | Updatable | X |
| Protection of service key / domain key for SoC | X | Dynamic in license server |
| Deprotection of service key / domain key by SoC | Updatable | X |
| Protection of content key by service key / domain key | X | Dynamic and persisted in license server |
| Deprotection of content key by service key / domain key | Updatable | X |
| Protection of service key / domain key by service key / domain key | X | Dynamic and persisted in license server |
| Deprotection of service key / domain key by service key / domain key | Updatable | X |

**Table II - System hook profiles**

| **Name** | **Inputs** | **Outputs** |
|---|---|---|
| Attestation creation | Data to be attested, layer | Attestation |
| Attestation validation | Chain of attestations, attestation validation key | Validation status, attested data |
| Key exchange initialization | None | Encrypted data ED1 |
| Key exchange response | Encrypted data ED1, clear session key Ks, Nonce | Encrypted data ED2 |
| Key exchange finalization | Encrypted data ED2 | Clear session key Ks, Nonce |
| Provisioning initialization | Nonce | Encrypted data ED3 |
| Provisioning data creation | Customized protection root key, current time, license server certificate CERT-L, encrypted data ED3 | Device provisioning data D-DATA (with K_{SoC}), server provisioning data S-DATA (with K_{SoC}), Nonce |
| Import of provisioning data | Device provisioning data D-DATA (with K_{SoC}) | |
| Protection of content key Kc for SoC | Server provisioning data S-DATA (with K_{SoC}), content key Kc | Uniquely protected content key Kc |
| Deprotection of content key Kc by SoC | Uniquely protected content key Kc | Content key Kc locally protected for descrambler or key directly usable in descrambler hardware |
| Protection of service key Ksv / domain key Kdm for SoC | Server provisioning data S-DATA (with K_{Soc}), service seed / domain seed, current time | Uniquely protected service key Ksv / domain key Kdm |
| Deprotection of service key Ksv / domain key Kdm by SoC | Uniquely protected service key Ksv / domain key Kdm | Service key Ksv / Domain key Kdm locally protected |
| Protection of content key Kc by service key Ksv / domain key Kdm | Service seed / Domain seed, content key Kc, current time | Globally protected content key Kc |
| Deprotection of content key Kc by service key Ksv / domain seed Kdm | Globally protected content key Kc, service key Ksv / domain key Kdm locally protected | Content key Kc locally protected for descrambler or key directly usable in descrambler hardware |
| Protection of service key Ksv1 / domain key Kdm 1 by service key Ksv2 / domain key Kdm2 | Service seed SEEDsv1 / Domain seed SEEDdm1, service seed SEEDsv2 / domain seed SEEDdm2, current time | Globally protected service key Ksv1 / domain key Kdm1 |
| Deprotection of service key Ksv1 / domain key Kdm1 by service key Ksv2 / domain key Kdm2 | Globally protected service key Ksv1 / domain key Kdm1, locally protected service key Ksv2 / domain key Kdm2 | Service key Ksv1 / Domain key Kdm1 locally protected |

In variant implementations, the client device 1 is configured for transmitting the request REQ1-5G to the provisioning server 5 independently of the request for a device certificate CERT-D. The DRM key K'_{DRM} to be exploited in combination with the customized security elements is then generated and/or certified before or after the device 1 is equipped with those customized security elements. Consistently, the provisioning server 5 is configured for sending the provisioning material G-MAT or the related links G-LINKS to the client device 1 under request independently of the device certificate CERT-D.

In such variants, the server-directed security elements processed in the device 1 may be dealt with, and possibly stored in, the complementary secure area 13 instead of the baseline secure area 12 as developed above. For example, they may be processed for transmission to the server 3 in the TEE 120 in charge of processing the client-directed security elements.

Also, other device-associated keys are possible than the DRM key pair K_{DRM}, K'_{DRM}. Thus, in alternative implementations, a secret shared between the device 1 and the license server 3 is exploited for encryption/decryption. Such key may be of an AES type, e.g. a 128-bit AES key.

In other variant embodiments, instead of exploiting the public key K'_{DRM} in the license server 3 together with the private key K_{DRM} in the device 1 in the frame of public-key cryptography, secure exchanges between the device 1 and the license server 3 is based on symmetric-key cryptography, e.g. on a Kerberos protocol.

In addition, though customization is put forth throughout the present disclosure as a particularly attractive field of applications, the disclosure pertains to any kinds of exploitation of a dynamic in-field or in-factory DRM provisioning, including possibly initial provisioning of license servers and client devices - which may even be carried out before originally setting the DRM transport keys K_{DRM}. Notably, the disclosure may thus apply to DRM configuration updating, adaptation, adjustments, reaction to hacking risks, compliance with enhanced security standards, diversification, or periodic changes. In all applications, any or all of the security elements may be introduced or modified consistently in the license servers and the client devices.

## Claims

1. A digital rights management license server (3, 30) configured for conditionally authorizing access by a client device (1, 10) to available protected contents (C2-1) upon receiving a license request (REQ1-3L) from the device, the license server including:
- at least one input (39) adapted to receive the license request from the device, the license request comprising at least one encryption key (K'_{DRM}) associated with the device and adapted to be exploited by the license server for protecting access information (Kc, Kg, Ksv, Kdm) to said protected contents,
- at least one processor (31) configured for conditionally validating the license request if related authorization conditions are met and, if the license request is validated, for generating protected access information from said access information by protecting said access information with said at least one device-associated key (K'_{DRM}) and with at least one security function (UP-S, UP-R) available to the license server independently from the received license request, and for generating a license (LIC3-1) containing said protected access information,
- at least one output (39) adapted to send said license to the device,
**characterized in that**, the license request including server-directed security elements (S-DATA, PF, Ksoc; S-LINKS):
- said at least one processor is configured for protecting said access information (Kc, Kg, Ksv, Kdm) by exploiting the server-directed security elements so as to generate pre-protected access information (P-Kc, P-Kg, P-Ksv, P-Kdm), and for applying to said pre-protected access information said at least one security function (UP-S, UP-R) with said at least one device-associated key (K'_{DRM}) so as to generate said protected access information.

2. The license server according to claim 1, **characterized in that** the server-directed security elements (S-DATA, PF, K_{SoC}) include at least one of a software code, a secret and server provisioning data.

3. The license server according to claim 1 or claim 2, **characterized in that** the server-directed security elements (S-LINKS) include a signalization enabling to access at least one of a software code, a secret and server provisioning data.

4. The license server according to any of claims 1 to 3, **characterized in that** the license request (REQ1-3L) includes a client device certificate (CERT-D) containing said at least one device-associated key (K'_{DRM}) and the server-directed security elements.

5. The license server according to any of claims 1 to 4, **characterized in that** said access information including at least one content-access key (Kc) and the server-directed security elements involving at least one key protection function (PF-S, PF-L):
- said at least one processor is configured for applying said at least one key protection function to said at least one content-access key so as to produce at least part of said pre-protected access information (P-Kc, P-Kg, P-Ksv, P-Kdm).

6. The license server according to any of claims 1 to 5, **characterized in that** said access information including at least one key-encryption key (Kg, Ksv, Kdm) and the server-directed security elements involving at least one key protection function (PF-R, PF-I):
- said at least one processor is configured for applying said at least one key protection function to said at least one key-encryption key so as to produce at least part of said pre-protected access information (P-Kg, P-Ksv, P-Kdm).

7. A digital rights management device (1, 10) associated with a digital rights management client securing access control to available protected contents (C2-1), said device including:
- at least one input (109) adapted to receive a license (LIC3-1) containing access information (Kc, Kg, Ksv, Kdm) to said protected contents from a license server (3, 30), said access information being protected with at least one encryption key (K'_{DRM}) associated with said device and with at least one security function (UP-S, UP-R),
- at least one processor (1010, 1301) configured for extracting said access information by applying to said protected access information at least one security reversal function (UDP-S, UDP-R) corresponding to said at least one security function with at least one device-associated decryption key (K_{DRM}) corresponding to said at least one device-associated encryption key, and for enabling access to the protected contents based on said extracted access information,
- at least one output (109) adapted to communicate a license request (REQ1-3L) to the license server for obtaining said license, said at least one security function being available to the license server independently from the license request,
**characterized in that**:
- said at least one input is adapted to receive security material (G-MAT; G-LINKS) suited to dynamically setting said access control to the protected contents,
- said at least one processor is configured for deriving from said security material client-directed security elements (D-DATA, DPF, Ksoc; D-LINKS), generating pre-cleared access information (P-Kc, P-Kg) by applying to the protected access information said at least one security reversal function with said at least one device-associated decryption key, and extracting said access information from said pre-cleared access information through exploiting said client-directed security elements,
- said at least one output is adapted to communicate to the license server, within said license request, server-directed security elements (S-DATA, PF, K_{SoC}; S-LINKS) corresponding to said client-directed security elements and derived from said received security material, said server-directed security elements being adapted to be exploited by the license server with said at least one security function and said at least one device-associated encryption key for generating said protected access information,
said digital rights management device (1, 10) being advantageously adapted to receive said license from a license server according to any of claims 1 to 7.

8. The digital rights management device according to claim 7, **characterized in that** said at least one processor (1010, 1301) includes at least one first secure part (120) configured for generating said pre-cleared access information by applying to the protected access information said at least one security reversal function with said at least one device-associated decryption key, and at least one second secure part (1301) configured for extracting said access information from said pre-cleared access information, said first and second secure parts being securely insulated from one another and configured for securely communicating together.

9. The digital rights management device according to claim 7 or 8, **characterized in that** said client-directed security elements (D-DATA, DPF, Ksoc; D-LINKS) involve configuration data and software code adapted to alter at least one functionality of said device.

10. The digital rights management device (1, 10) according to any of claims 7 to 9, **characterized in that**:
- said at least one input (109) is adapted to receive a digital certificate (CERT-D) containing said at least one device-associated encryption key (K'_{DRM}) and said server-directed security elements (S-DATA, PF, Ksoc; S-LINKS),
- said at least one output (109) is adapted to communicate said received certificate to the license server.

11. A method for securing access control to available protected contents (C2-1) by a digital rights management client device (1, 10), said method being executed by at least one processor (1010, 1301) and including:
- receiving a license (LIC3-1) containing access information (Kc, Kg, Ksv, Kdm) to said protected contents from a license server (3, 30), said access information being protected with at least one security function (UP-S, UP-R), and with at least one encryption key (K'_{DRM}) associated with said device,
- extracting said access information by applying to said protected access information at least one security reversal function (UDP-S, UDP-R) corresponding to said security function with at least one decryption key (K_{DRM}) corresponding to said at least one encryption key, and for enabling access to the protected contents based on said extracted access information,
- communicating a license request (REQ1-3L) to the license server for obtaining said license,
**characterized in that** said method for securing access control includes:
- receiving security material (G-MAT; W-DATA1) suited to dynamically setting said access control to the protected contents,
- deriving from said security material client-directed security elements (D-DATA, DPF, K_{SoC}; D-LINKS), generating pre-cleared access information by applying to the protected access information said at least one security reversal function with said at least one decryption key, and extracting said access information from said pre-cleared access information through exploiting said client-directed security elements,
- communicating to the license server, within said license request, server-directed security elements (S-DATA, PF; S-LINKS) corresponding to said client-directed security elements and derived from said received security material, said server-directed security elements being adapted to be exploited by the license server with said at least one security function and said at least one encryption key for generating said protected access information,
said method for securing access control being advantageously executed by a digital rights management device (1, 10) according to any of claims 8 to 11.

12. A provisioning server (5, 50) configured for provisioning at least one digital rights management client device (1, 10) with security material (G-MAT; G-LINKS) suited to dynamically setting access control of said at least one device to protected contents (C2-1), the access control being based on access information (Kc, Kg, Ksv, Kdm) to the protected contents received by said at least one device from at least one license server (3, 30) and protected with at least one encryption key (K'_{DRM}) associated with said at least one device and at least one security function (UP-S, UP-R), said protected access information being subject to protection reversal by said at least one device with at least one decryption key (K_{DRM}) corresponding to said at least one encryption key and with at least one security reversal function (UDP-S, UDP-R) corresponding to said at least one security function, said provisioning server including:
- at least one input (59) adapted to receive said security material, identification data (REQ1-5B) of said at least one device and identification data (CERT-L) of said at least one license server, and a request (REQ1-5G) for communicating the security material to said at least one device,
- at least one processor (51) configured for checking whether said at least one device is authorized to obtain the security material,
- at least one output (59) adapted to communicate said security material to said at least one device if said at least one device is authorized,
**characterized in that** said communicated security material is suited for said at least one device to derive client-directed security elements (D-DATA, DPF; D-LINKS) adapted to be exploited by said at least one device for extracting said access information from pre-cleared access information, obtained by applying to the protected access information said at least one security reversal function with said at least one decryption key, through exploiting the client-directed security elements, and to derive server-directed security elements (S-DATA, PF; S-LINKS) corresponding to the client-directed security elements, to be transmitted from said at least one device to said at least one license server and adapted to be exploited by said at least one license server with said at least one security function and said at least one encryption key for generating said protected access information, said at least one security function being available to said at least one license server and said at least one security reversal function being available to said at least one device independently from the communicated security material,
said provisioning server being advantageously adapted to provision a digital rights management device according to any of claims 7 to 10.

13. A method for provisioning at least one digital rights management client device (1, 10) with security material (G-MAT; G-LINKS) suited to dynamically setting access control of said at least one device to protected contents (C2-1), the access control being based on access information (Kc, Kg, Ksv, Kdm) to the protected contents received by said at least one device from at least one license server (3, 30) and protected with at least one encryption key (K'_{DRM}) associated with said at least one device and at least one security function (UP-S, UP-R), said protected access information being subject to protection reversal by said at least one device with at least one decryption key (K_{DRM}) corresponding to said at least one encryption key and with at least one security reversal function (UDP-S, UDP-R) corresponding to said at least one security function, said provisioning method being executed by at least one processor (51) and including:
- receiving said security material, identification data (REQ1-5B) of said at least one device and identification data (CERT-L) of said at least one license server, and a request (REQ1-5G) for communicating the security material to said at least one device,
- checking whether said at least one device is authorized to obtain the security material,
- communicating said security material to said at least one device if said at least one device is authorized,
**characterized in that** said communicated security material is suited for said at least one device to derive client-directed security elements (D-DATA, DPF, Ksoc;
D-LINKS) adapted to be exploited by said at least one device for extracting said access information from pre-cleared access information, obtained by applying to the protected access information said at least one security reversal function with said at least one decryption key (K_{DRM}), through exploiting the client-directed security elements, and to derive server-directed security elements (S-DATA, PF, K_{SoC}; S-LINKS) corresponding to the client-directed security elements, to be transmitted from said at least one device to said at least one license server and adapted to be exploited by said at least one license server with said at least one security function and said at least one encryption key for generating said protected access information, said at least one security function being available to said at least one license server and said at least one security reversal function being available to said at least one device independently from the communicated security material,
said method for provisioning being advantageously adapted to be executed by a server for provisioning (71, 72) according to claim 12.

14. A computer program comprising software code adapted to perform a method selected among a method for conditionally authorizing access according to claim 7, a method for securing access control according to claim 11 and a method for provisioning according to claim 13 when said software code is executed by a processor.
